# EUROPEAN PATENT APPLICATION

(11) **EP 4 215 963 A1**
(43) Date of publication of application: **26.07.2023**
(21) Application number: 23151705.3
(22) Date of filing: 16.01.2023
(51) Int. Cl.: G02B 6/02

(54) **SINGLE-MODE OPTICAL FIBER WITH DYED THIN COATING**

(30) Priority: 25.01.2022 US 202263302794 P; 03.05.2022 US 202263337787 P
(71) Applicant: Corning Research & Development Corporation, Corning, New York 14831 (US)
(72) Inventor: CLARK, Jeffrey Scott, New York, 14858 (US); DRAKE, Matthew Ryan, New York, 14870 (US); GU, Yunfeng, New York, 14870 (US); Li, Ming-Jun, New York, 14845 (US); McCARTHY, Joseph Edward, New York, 14843 (US); McCLURE, Randy LaRue, New York, 14830 (US); NIU, Weijun, New York, 14870 (US); WU, Qi, New York, 14870 (US)
(74) Representative: Sadler, Peter Frederick

(57) **Abstract**

The present disclosure relates to a thin coated optical fiber that enables connector assembly without stripping the optical fiber. In particular, the thin coating comprises a hard coating, a dye concentrate, and an adhesion promoter. The formulation of the coating promotes adhesion to a glass cladding of the optical fiber and to a ferrule bore (into which the optical fiber is inserted) by not causing silane decomposition of the coating. Moreover, the coating is colored to enable, among other things, fiber identification within a connector. The thin coated optical fibers exhibit good mechanical and optical performance properties as discussed herein.

## Description

### PRIORITY APPLICATIONS

This application claims the benefit of priority of U.S. Provisional Application No. 63/337,787, filed on May 3, 2022, and U.S. Provisional Application No. 63/302,794, filed on January 25, 2022, both applications being incorporated herein by reference.

### FIELD OF THE DISCLOSURE

This disclosure pertains to single-mode optical fibers. More particularly, this disclosure pertains to small diameter single-mode optical fibers. Most particularly, this disclosure pertains to small diameter single-mode optical fibers having a reduced coating thickness without a significant decrease in puncture resistance. More particularly, this disclosure pertains to coated optical fibers for use in optical fiber connectors where the coated optical fibers have consistent coating diameters and reduced concentricity values. More particularly, this disclosure relates to coated optical fibers suitable in single and multifiber connectors where the coating composition of the optical fiber includes a dye composition and is applied directly onto the optical fiber without decomposing the optical fiber.

### BACKGROUND OF THE DISCLOSURE

Optical fibers are commonly used for voice, video, and data transmissions in many different settings each of which can pose installation challenges. In a telecommunications system that uses optical fibers, there are typically many locations where fiber optic cables carrying the optical fibers connect to equipment or other fiber optic cables. To conveniently provide these connections, optical fiber connectors ("connectors") are often provided on the ends of fiber optic cables.

The process of terminating an optical fiber with a connector generally includes stripping the optical fiber to remove a protective coating, injecting adhesive into a bore of a ferrule, inserting the stripped ("bare") optical fiber into and through the ferrule bore, curing the adhesive to secure the optical fiber in the ferrule, cleaving the optical fiber close to an end face of the ferrule, and polishing the optical fiber and ferrule end face.

Various non-contact stripping processes have been developed to remove the protective coating with minimum damage to the bare optical fiber. However, when the bare optical fiber is inserted in a ferrule, any mechanical contact can still result in flaws that cause immediate failure (e.g., fiber break) or failures in the long term. In addition, to achieve low insertion loss in connectors, the inner diameter of the ferrule is closely matched to the outer diameter of the bare optical fiber. Because the bare optical fiber is also slightly eccentric in terms of the center of its core relative to the geometric center of the bare optical fiber, sometimes it is desirable to rotate the bare optical fiber inside the ferrule so that the concentricity error of a fiber core relative to the center of the ferrule is minimized. These processes further increase the mechanical contact of the glass surface with the ferrule, thereby increasing the risk of flaws/damage to the bare optical fiber.

Improvements in the foregoing are desired.

### SUMMARY

The present disclosure relates to a thin coated optical fiber that enables connector assembly without stripping the optical fiber. In particular, the thin coating comprises a hard coating, a dye concentrate, and an adhesion promoter. The formulation of the coating promotes adhesion to a glass cladding of the optical fiber and to the ferrule bore (into which the optical fiber is inserted) by not causing silane decomposition of the coating. Moreover, the coating is colored to enable, among other things, fiber identification within a connector. The thin coated optical fibers exhibit good mechanical and optical performance properties as discussed herein.

In one embodiment, a coated optical fiber is provided. The coated optical fiber comprising: a glass optical fiber comprising a fiber core and a cladding surrounding the fiber core; and a polymer coating surrounding the glass optical fiber, the polymer coating comprising a hard coating, a dye concentrate, and an adhesion promoter; wherein the polymer coating has a thickness between 0.1 microns and 10 microns; wherein the polymer coating has a concentricity relative to the fiber core ranging between 0.1 microns and 0.5 microns.

In another embodiment, the dye concentrate comprises less than 40 wt.% of a composition of the polymer coating. In another embodiment, the adhesion promoter comprises less than 4 wt.% of a composition of the polymer coating. In another embodiment, the polymer coating is selected from the group consisting of: UV-cured acrylates, organic UV-curing acrylate resins filled with SiO₂ or ZrO₂ nanoparticles, non-acrylate polymers such as polyimides, and silane additives. In another embodiment, the concentricity of the polymer coating relative to the fiber core is less than about 0.15 microns. In another embodiment, the adhesion promoter is selected from the group consisting of: acryloxy silanes, methacrylate silanes, or Mercapto silanes, such as (3-Mercaptopropyl) trimethoxysilane and (3-acryloxypropyl)trimethoxysilane.

In one embodiment, an optical fiber connector assembly. The optical fiber connector assembly comprising: a coated optical fiber comprising: a glass optical fiber comprising a fiber core and a cladding surrounding the fiber core; and a polymer coating surrounding the glass optical fiber, the polymer coating having a thickness between 0.1 microns and 10 microns, and a concentricity relative to the fiber core ranging between 0.1 microns and 0.5 microns; and a ferrule having a front end, a rear end, and a ferrule bore extending between the front end and the rear end, wherein the coated optical fiber is positioned within the ferrule bore; wherein the polymer coating comprises: a hard coating, a dye concentrate, and an adhesion promoter; and wherein the dye concentrate comprises less than 40 wt.% of a composition of the polymer coating.

In some embodiments, the adhesion promoter comprises less than 4 wt.% of a composition of the polymer coating. In some embodiments, the assembly has an insertion loss ranging between 0.1 dB and 1.5 dB at a reference wavelength of 1310 nm or 1550 nm. In some embodiments, the hard coating is selected from the group consisting of: UV-cured acrylates, organic UV-curing acrylate resins filled with SiO2 or ZrO2 nanoparticles, non-acrylate polymers such as polyimides, and silane additives. In some embodiments, the adhesion promoter is selected from the group consisting of: acryloxy silanes, methacrylate silanes, or Mercapto silanes, such as (3-Mercaptopropyl) trimethoxysilane and (3-acryloxypropyl)trimethoxy silane.

In one embodiment, a method of preparing an optical fiber connector assembly that includes a coated optical fiber and a ferrule, the coated optical fiber comprising a glass optical fiber and a polymer coating surrounding the glass optical fiber, the glass optical fiber including a fiber core and a cladding surrounding the fiber core, the ferrule having a front end, a rear end, and a ferrule bore extending between the front end and the rear end, the method comprising: inserting the coated optical fiber into the ferrule; wherein the polymer coating of the coated optical fiber engages with an inner surface of the ferrule bore; wherein the coated optical fiber comprises a hard coating, a dye concentrate, and an adhesion promoter; wherein the polymer coating has a thickness between 0.1 microns and 10 microns; and wherein the dye concentrate comprises less than 40 wt.% of a composition of the polymer coating.

In some embodiments, the method further comprising applying a bonding agent on an external surface of the polymer coating prior to inserting the coated optical fiber into the ferrule bore. In some embodiments, the hard coating is selected from the group consisting of: UV-cured acrylates, organic UV-curing acrylate resins filled with SiO2 or ZrO2 nanoparticles, non-acrylate polymers such as polyimides, and silane additives. In some embodiments, a concentricity of the polymer coating relative to the fiber core ranges between 0.1 microns and 0.5 microns. In some embodiments, the optical fiber connector assembly has an insertion loss ranging between 0.1 dB and 1.5 dB at a reference wavelength of 1310 nm or 1550 nm. In one embodiment, a method of preparing a coated optical fiber that comprises a glass optical fiber and a polymer coating. The method comprising: mixing a hard coating, a dye concentrate, and the adhesion promoter to form a polymer mixture; filtering the polymer mixture through a filter to form the polymer coating, wherein the filter comprises opening of less than 3 microns; drawing the glass optical fiber through the polymer coating to form the coated optical fiber.

Additional features and advantages will be set forth in the detailed description which follows, and in part will be readily apparent to those skilled in the art from the description or recognized by practicing the embodiments as described in the written description and claims hereof, as well as the appended drawings.

It is to be understood that both the foregoing general description and the following detailed description are merely exemplary and are intended to provide an overview or framework to understand the nature and character of the claims.

The accompanying drawings are included to provide a further understanding and are incorporated in and constitute a part of this specification. The drawings are illustrative of selected aspects of the present disclosure, and together with the description serve to explain principles and operation of methods, products, and compositions embraced by the present disclosure.

### BRIEF DESCRIPTION OF THE DRAWINGS

FIG. 1 is a cross-sectional view of an optical fiber with coating(s) applied thereto.
FIG. 2 is a graph depicting variations in the outer diameters of optical fiber of FIG. 1.

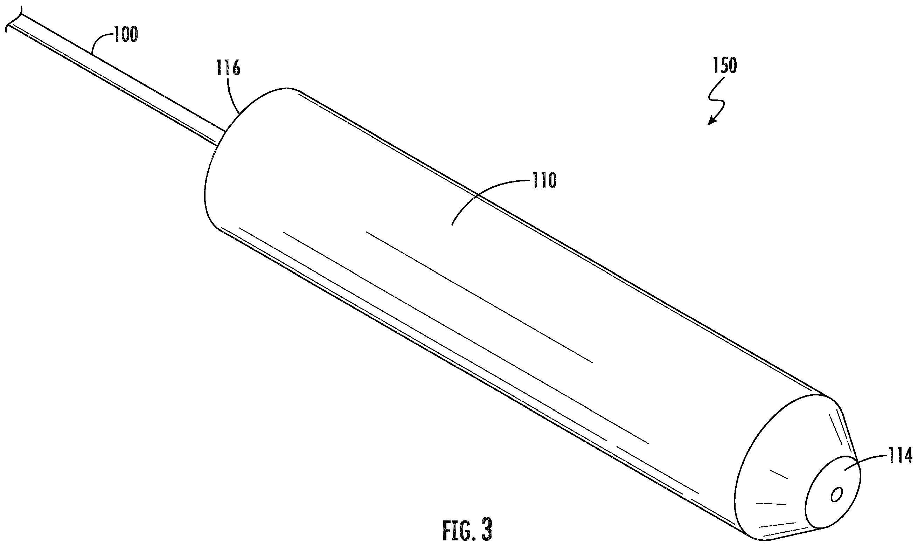

FIG. 3 is a perspective view of an optical fiber connector assembly where the optical fiber of FIG. 1 is inserted into a ferrule.
FIG. 4 is a cross-sectional view of an optical fiber connector assembly where the optical fiber of FIG. 1 is inserted into a ferrule with a bonding agent shown.
FIG. 5 is a front view of an optical fiber end face of the optical fiber connector assembly of FIG. 4.
FIG. 6 is a rear perspective view of the optical fiber connector assembly of FIGS. 4 and 5.
FIG. 7 is a rear perspective view of an optical fiber connector assembly including a ferrule holder assembled with the optical fiber and the ferrule of FIGS. 4-6.
FIG. 8 is a rear perspective view of an optical fiber connector assembly including a loose tube cable applied onto the optical fiber and the ferrule of FIGS. 4-6.
FIG. 9 is a rear perspective view of an optical fiber connector assembly including a loose tube cable and a flange applied onto the optical fiber and the ferrule of FIGS. 4-6.
FIG. 10 relates to Example 1 and shows an end face geometry of a polished optical fiber connector.
FIG. 11 relates to Example 1 and shows a microscope image of a polished end face of a thin coated optical fiber.
FIG. 12 relates to Example 1 and shows measured core-to-ferrule concentricity values of the optical fiber connector samples of Example 1.
FIG. 13 relates to Example 1 and shows a simulated insertion loss distribution of optical fiber connector samples of Example 1.
FIG. 14 relates to Example 2 and shows measured core-to-ferrule concentricity values of the optical fiber connector samples of Example 2.
FIG. 15 relates to Example 2 and shows a simulated insertion loss distribution of optical fiber connector samples of Example 2.
FIG. 16 relates to Example 2 and shows measured random mating insertion loss for six optical fiber connector samples of Example 2.
FIG. 17A is a perspective view of an optical fiber ribbon comprising multiple optical fibers with a thin colored coating.
FIG. 17B is a perspective view of the optical fiber ribbon of FIG. 17A inserted into an MPO connector.
FIG. 18A is a front view of an end face of the MPO connector of FIG. 17B.
FIG. 18B is an expanded front view of the end face of FIG. 18A.
FIG. 19 relates to Example 4 and shows fiber movement data of blue dyed coated optical fibers as compared to uncolored coated optical fibers and uncoated optical fibers.
FIG. 20 relates to Example 5 and shows fiber movement data of orange dyed coated optical fibers as compared to uncolored coated optical fibers and uncoated optical fibers.
FIG. 21 relates to Example 6 and shows fiber movement data of green, black, and violet dyed coated optical fibers.
FIG. 22 relates to Example 7 and shows fiber movement data of red, yellow, and gray dyed coated optical fibers.
FIG. 23 relates to Example 8 and shows fiber movement data of brown and white dye coated optical fibers.
FIG. 24 relates to Example 9 and shows fiber movement data of rose and aqua dye coated optical fibers.
FIG. 25 relates to Example 10 and shows fiber movement data of an optical fiber with a colored ink coating for comparison purposes to the coated optical fibers data of the present disclosure.

### DETAILED DESCRIPTION

The present disclosure is provided as an enabling teaching and can be understood more readily by reference to the following description, drawings, examples, and claims. To this end, those skilled in the relevant art will recognize and appreciate that many changes can be made to the various aspects of the embodiments described herein, while still obtaining the beneficial results. It will also be apparent that some of the desired benefits of the present embodiments can be obtained by selecting some of the features without utilizing other features. Accordingly, those who work in the art will recognize that many modifications and adaptations are possible and can even be desirable in certain circumstances and are a part of the present disclosure. Therefore, it is to be understood that this disclosure is not limited to the specific compositions, articles, devices, and methods disclosed unless otherwise specified. It is also to be understood that the terminology used herein is for the purposes of describing particular aspects only and is not intended to be limiting.

In this specification, and in the claims, which follow, reference will be made to a number of terms which shall be defined to have the following meanings:

"Optical fiber" refers to a waveguide having a glass portion surrounded by a coating. The glass portion includes a core and a cladding and is referred to herein as a "glass optical fiber" or simply "glass fiber".

"Concentricity" (or "concentricity error") is defined as the distance between the geometric centers of two shapes/profiles, where one of the shapes surrounds the other shape. The shapes/profiles may be defined by different elements, such as the outer surface of polymer coating 106 and the outer surface of core 102 as discussed in greater detail below. Thus, the concentricity of polymer coating 106 relative to core 102 is the distance between a geometric center of polymer coating 106 and a geometric center of core 102. Similarly, a concentricity of core 102 relative to ferrule 110 ("core-to-ferrule concentricity") is the distance between the geometric center of core 102 and a geometric center of ferrule 110.

The present disclosure relates to a thin coated optical fiber that enables connector assembly without stripping the optical fiber. In particular, the thin coating comprises a hard coating, a dye concentrate, and an adhesion promoter. The formulation of the coating promotes adhesion to a glass cladding of the optical fiber and to the ferrule bore (into which the optical fiber is inserted) by not causing silane decomposition of the glass coating. Moreover, the coating is colored to enable, among other things, fiber identification in a cable assembly. The thin coated optical fibers exhibit good mechanical and optical performance properties as discussed herein.

### Optical Fiber 100

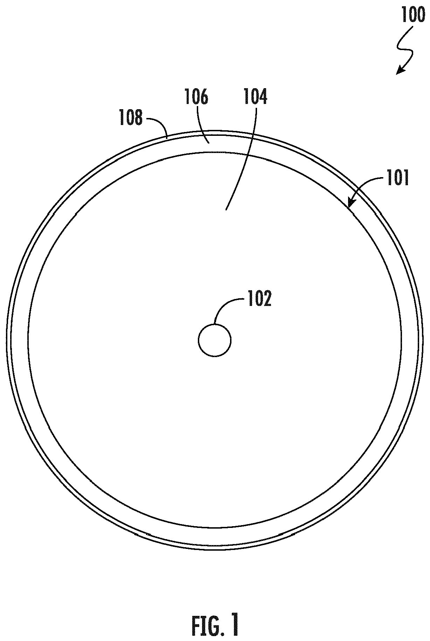

Referring first to FIG. 1, an optical fiber 100 is shown. Optical fiber 100 comprises a glass fiber 101 and a polymer coating 106. In some embodiments, optical fiber 100 includes a secondary hot melt coating 108 as discussed below.

Glass fiber 101 includes a core 102 and a cladding 104, as is known in the art. Core 102 has a higher refractive index than cladding 104, and glass fiber 101 functions as a waveguide. In many applications, core 102 and cladding 104 have a discernible core-cladding boundary.

### Core 102

Core 102 comprises silica glass. The silica glass of the core region may be undoped silica glass, updoped silica glass, and/or downdoped silica glass. Updoped silica glass includes silica glass doped with an alkali metal oxide (e.g. Na₂O, K₂O, Li₂O, Cs₂O, or Rb₂O). Downdoped silica glass includes silica glass doped with flourine (F). In one embodiment, the silica glass of core 102 may be germanium (Ge)-free and/or chlorine (Cl)-free; that is the core region comprises silica glass that lacks Ge and/or Cl.

Additionally, or alternatively, core 102 may comprise silica glass doped with at least one alkali metal, such as, lithium (Li), sodium (Na), potassium (K), rubidium (Rb), cesium (Cs) and/or francium (Fr). In some embodiments, the silica glass is doped with a combination of sodium, potassium, and rubidium. The silica glass may have a peak alkali concentration in the range from about 10 ppm to about 500 ppm, or in the range from about 20 ppm to about 450 ppm, or in the range from about 50 ppm to about 300 ppm, or in the range from about 10 ppm to about 200 ppm, or in the range from about 10 ppm to about 150 ppm. The alkali metal doping within the disclosed ranges results in lowering of Rayleigh scattering, thereby proving a lower optical fiber attenuation.

In some embodiments, core 102 comprises silica glass doped with an alkali metal and doped with F as a downdopant. The concentration of F in core 102 of optical fiber 100 is in the range from about 0.1 wt% to about 2.5 wt%, or in the range from about 0.25 wt% to about 2.25 wt%, or in the range from about 0.3 wt% to about 2.0 wt%.

In other embodiments, core 102 comprises silica glass doped with Ge and/or Cl. The concentration of GeO₂ in the core of the fiber may be in a range from about 2.0 to about 8.0 wt%, or in a range from about 3.0 to about 7.0 wt%, or in a range from about 4.0 to about 6.5 wt.%. The concentration of Cl in the core of the fiber may be in a range from 1.0 wt% to 6.0 wt%, or in a range from 1.2 wt% to 5.5 wt%, or in a range from 1.5 wt% to 5.0 wt%, or in a range from 2.0 wt% to 4.5 wt%, or greater than or equal to 1.5 wt% (e.g., ≥ 2 wt%, ≥ 2.5 wt%, ≥ 3 wt%, ≥ 3.5 wt%, ≥ 4 wt%, ≥ 4.5 wt%, ≥ 5 wt%, etc.).

The radius of core 102 is in the range from about from about 3.0 microns to about 6.5 microns, or in the range from about 3.5 microns to about 6.0 microns, or in the range from about 4.0 microns to about 6.0 microns, or in the range from about 4.5 microns to about 5.5 microns. In some embodiments, core 102 includes a portion with a constant or approximately constant relative refractive index that has a width in the radial direction of at least 1.0 micron, or at least 2.0 microns, or at least 3.0 microns, or in the range from 1.0 microns to 3.0 microns, or in the range from 2.0 microns to 3.0 microns.

### Cladding 104

Cladding 104 is composed of material(s) with an appropriate refractive index differential to provide desired optical characteristics with core 102. In embodiments in which core 102 is doped with Germanium (Ge) and/or Chlorine (Cl), cladding 104 comprises silica that is substantially free of Ge and/or Cl. In some embodiments, cladding 104 comprises silica doped with Fluorine (F).

In some embodiments, the radius of cladding 104 is in the range from about 30 microns to about 75 microns, or in the range from about 40 microns to about 70 microns, or in the range from about 55 microns to about 62.5 microns, or in the range from about 57.5 microns to about 125 microns, or in the range from about 11.0 microns to about 13.0 microns.

### Polymer Coating 106

Referring to FIG. 1, a polymer coating 106 is applied onto glass fiber 101 such that polymer coating 106 is in contact with cladding 104 about a circumference of optical fiber 100. Polymer coating 106 has a substantially consistent thickness along a length of optical fiber 100. Stated another way, optical fiber 100 has a substantially consistent outer diameter along a length of optical fiber 100. In one embodiment, in this context, the length of optical fiber 100 is about 1.5 kilometers (km) or 2 km. In some embodiments, thickness of polymer coating 106 is between 0.1 microns and 10 microns, 0.1 microns and 5 microns, or 0.1 microns and 2.5 microns about the circumference of optical fiber 100. In some embodiments, the thickness of polymer coating 106 has a standard deviation ranging between 0.1 microns and 0.5 microns, 0.1 microns and 0.3 microns, or 0.1 microns and 0.2 microns.

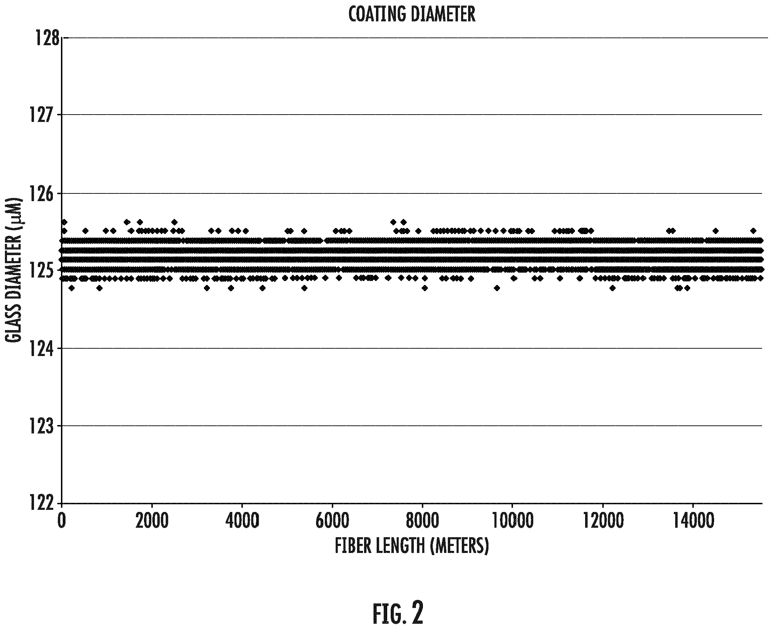

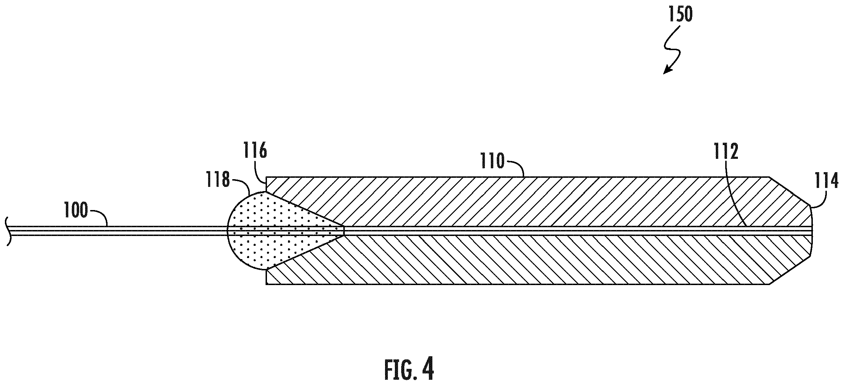

As discussed in greater detail below, the outer diameter of polymer coating 106 (substantially equivalent to outer diameter of optical fiber 100) is less than an inner diameter of a ferrule bore 112 (FIG. 4). As shown in FIG. 2, a graph of polymer coating diameter is shown along a fiber length of 1.5 km. As shown, there is minimal variation in polymer coating outer diameter; polymer coating outer diameter varies by about 0.3 microns to 0.5 microns. Stated another way, in some embodiments, the outer diameter of polymer coating 106 is 125 microns ± 0.3 microns.

In some embodiments, polymer coating 106 comprises a hard coating, a dye concentrate, and an adhesion promoter. As discussed below, the hard coating mixes with the dye concentrate and the adhesion promoter to form formulation of polymer coating 106 where the adhesion promoter does not decompose when mixed with the hard coating and the dye concentrate, which maintains the effectiveness of the adhesion promoter.

Typical coating formulations with adhesion promoters of the present disclosure or the like decompose in mixtures or formulations with high water content, high acidity, or high basic impurities. By contrast, the hard coating of the present disclosure, within the formulation of polymer coating 106, has a water content of less than 0.20 wt.%. Also, in some embodiments, the hard coating, within the formulation of polymer coating 106, has an acidity of less than 0.050%. In addition, in some embodiments, the hard coating, within the formulation of polymer coating 106, has a basic impurities content of less than 6 parts per million (ppm).

In some embodiments, the hard coating comprises UV-cured acrylates or organic UV-curing acrylate resins filled with SiO₂ or ZrO₂ nanoparticles or non-acrylate polymers such as polyimides.

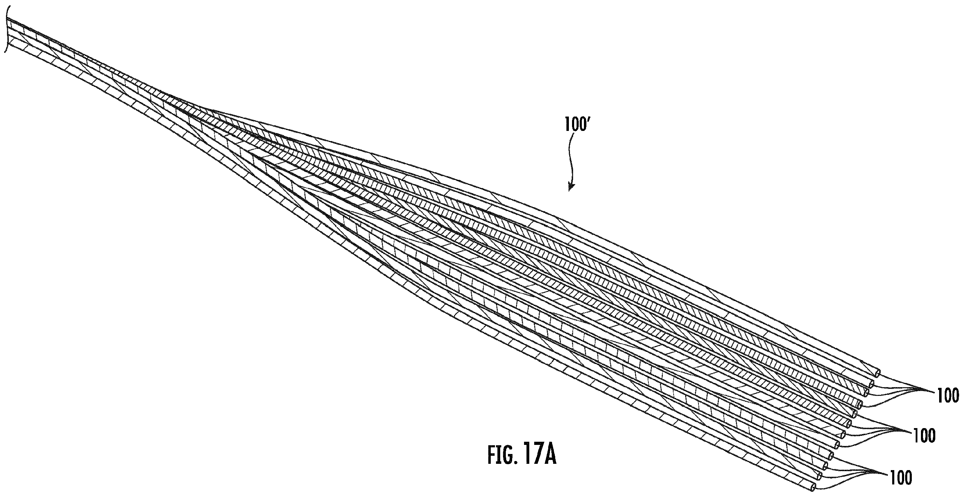

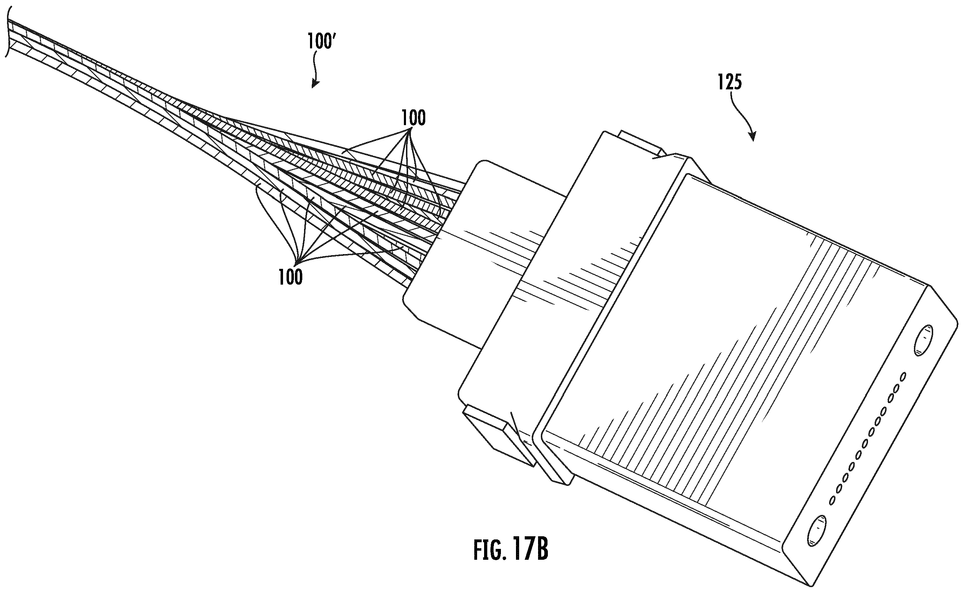

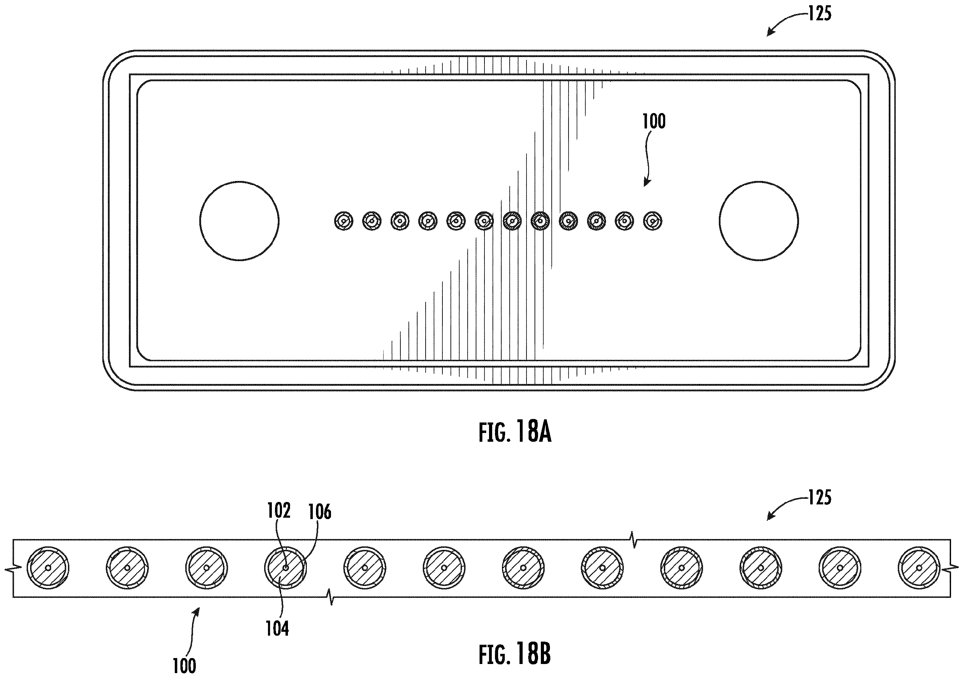

In some embodiments, polymer coating 106 serves as a colored layer having various physical properties as discussed herein. In particular, in such an embodiment, polymer coating 106 comprises a dye concentrate that is mixed with the hard coating and the adhesion promoter. As used herein, "dye concentrate" refers to a composition of a dye concentrate in acrylates, different color dye concentrates mixture, or a dye. The dye concentrate mixes with the hard coating and the adhesion promoter without decomposing the adhesion promoter. In some embodiments, the dye concentrate is UV curable. In some embodiments, the dye comprises less than 40 wt%, less than 30 wt.%, less than 20 wt.%, or less than 10 wt.% of the total composition of polymer coating 106. In some embodiments, polymer coatings 106 can be applied in the context of multiple optical fibers 100 (e.g., when the multiple optical fibers 100 form an optical fiber ribbon 100' (FIG. 17A) and/or are grouped for terminating a common multifiber connector 125 (FIGS. 17B, 18A, and 18B), such as an MPO connector) such that each optical fiber 100 of optical fibers 100 have a different color. In some embodiments, the dye concentrates of polymer coating 106 can yield up to 16 different colors. Advantageously, the integrated coloring of polymer coating 106 described above enables fiber identification without having to apply additional coloring compositions via additional coloring processes or other connector manipulation (e.g., connector disassembly, etc.).

In some embodiments of the colored polymer coating 106, an adhesion promoter is added to the composition of polymer coating 106. The adhesion promoter is configured to promote bonding to glass (e.g., optical fiber 100) or inorganic surfaces. In some embodiments, the adhesion promoter comprises less than 5 wt.%, less than 4 wt.%, or less than 3 wt.% of the total composition of polymer coating 106. In some embodiments, the adhesion promoter includes acryloxy silanes, methacrylate silanes, or Mercapto silanes, such as (3-Mercaptopropyl) trimethoxysilane and (3-acryloxypropyl)trimethoxysilane. In some embodiments, the adhesion promoter is (3-Mercaptopropyl) trimethoxysilane. Advantageously, as mentioned previously, the formulation described herein enables adhesion of the polymer coating 106 to optical fiber 100 without decomposing the silane(s) of the adhesion promoter, thereby, maintaining the physical/structural integrity of optical fiber 100 while polymer coating 106 provides a thin coating.

In some embodiments, polymer coating 106 has an elastic modulus value greater than 0.3 GPa, greater than 1 GPa, or greater than 2.5 GPa. In one embodiment, polymer coating 106 has an elastic modulus higher than 0.5 GPa or higher than 1 GPa. In another embodiment, polymer coating 106 has an elastic modulus of about 2.5 GPa. In some embodiments, polymer coating 106 has a hardness (Shore D) value greater than 60, greater than 70, or greater than 80. In one embodiment, polymer coating 106 has a hardness (Shore D) value of about 95. In some embodiments, polymer coating 106 has a pencil hardness value greater than 3H, greater than 4H, or greater than 5H on Polymethylmethacrylate (PMMA) film.

Advantageously, the thickness of polymer coating 106 enables optical fiber 100 to be inserted into a ferrule bore 112 (FIG. 4) of a ferrule 110 without stripping polymer coating 106 from optical fiber 100. In addition, the hardness of polymer coating 106 adequate protection to glass optical fiber 101 during processing of optical fiber 100 (e.g., insertion of optical fiber 100 into ferrule 110, etc.). A high modulus polymer coating 106 also minimizes variation in the optical fiber positioning in mated optical fiber connectors.

As mentioned previously, polymer coating 106 is applied onto glass optical fiber 101. Polymer coating 106 is applied onto glass optical fiber 101 such that a concentricity of polymer coating 106 relative to core 102 is substantially limited. In some embodiments, the concentricity of polymer coating 106 relative to core 102 ranges between 0.1 microns and 0.5 microns, 0.1 microns and 0.3 microns, or 0.1 microns and 0.2 microns. In one embodiment, the concentricity of polymer coating 106 relative to core 102 is less than about 0.15 microns.

In some embodiments, when optical fiber 101 is inserted into ferrule 110 (FIG. 4) as discussed below, a core to ferrule concentricity can be less than 5 microns, less than 1 microns, or less than 0.5 microns. In one embodiment, the core to ferrule concentricity is less than 0.5 microns.

As mentioned previously, as used herein, "concentricity" (or "concentricity error") is defined as the distance between the geometric centers of two shapes/profiles, where one of the shapes surrounds the other shape. The shapes/profiles may be defined by different elements, such as the outer surface of polymer coating 106 and the outer surface of core 102. Thus, the concentricity of polymer coating 106 relative to core 102 is the distance between a geometric center of polymer coating 106 and a geometric center of core 102. Similarly, a concentricity of core 102 relative to ferrule 110 ("core-to-ferrule concentricity") is the distance between the geometric center of core 102 and a geometric center of ferrule 110.

Another advantage of polymer coating 106 is that polymer coating can protect optical fiber 100 from surface damages during optical fiber insertion into ferrule 110 such that the break rate of optical fiber 100 is reduced as discussed herein. In addition, the coating diameter of polymer coating 106 and good adhesion properties to optical fiber 100 (via the adhesion promoter described above) enable low connector loss when optical fiber 100 is inserted into an optical connector.

### Secondary Hot Melt Coating 108

As mentioned previously, in some embodiments, optical fiber 100 includes secondary hot melt coating 108. As shown in FIG. 1, secondary hot melt coating 108 is applied onto polymer coating 106. In some embodiments, secondary hot melt coating 108 provides protection to optical fiber 100. Secondary hot melt coating 108 has a thickness of between about 5 microns and 250 microns, 5 microns and 175 microns, or 5 microns and 150 microns.

In other embodiments, secondary hot melt coating 108 is applied onto polymer coating 106, and secondary hot melt coating 108 has a thickness between 0.1 microns and 10 microns, 0.1 microns and 5 microns, or 0.1 microns and 2.5 microns about the circumference of optical fiber 100. In such embodiments, secondary hot melt coating 108 remains on optical fiber 100 and engages with inner surface of ferrule bore 112 upon insertion of optical fiber 100 into ferrule 110.

In other embodiments, secondary hot melt coating 108 is applied onto polymer coating 106, and secondary hot melt coating 108 has a thickness between 0.1 microns and 10 microns, 0.1 microns and 5 microns, or 0.1 microns and 2.5 microns about the circumference of optical fiber 100. In such embodiments, secondary hot melt coating 108 enables optical fiber 100 to be inserted and bonded to ferrule 110 in embodiments where ferrule 110 does not include bonding agent 118. That is, during the insertion of optical fiber 100 into ferrule 110, ferrule 110 is heated to a melting temperature of secondary hot melt coating 108. In some embodiments, secondary hot melt coating 108 has a melting temperature that is lower than the melting temperature of polymer coating 106. In this way, polymer coating 106 does not degrade at the heated temperature of ferrule 110. Then, optical fiber 100 is inserted into ferrule bore 112, and the molten secondary hot melt coating 108 bonds optical fiber 100 to inner surface of ferrule bore 112.

In some embodiments, secondary hot melt coating 108 is doped with titanium oxide to provide enhanced fatigue characteristics (e.g., resistance) to optical fiber 100.

### Optical Fiber Connector Assembly 150

Referring now to FIG. 4, an optical fiber connector assembly 150 is shown. Optical fiber connector assembly 150 includes a ferrule 110 and optical fiber 100 inserted into ferrule 110. In general, ferrule 110 includes a ferrule bore 112 extending between front and rear ends 114, 116 along a longitudinal axis A1. As shown in FIG. 4, ferrule bore 112 has a substantially consistent size from front end 114 to rear end 116. However, in some embodiments, ferrule bore 112 has a first section or counter-bore section extending inwardly from rear end 116 of the ferrule 110, a second section or ferrule microhole (also referred to as "micro-hole" or "micro-hole section") extending inwardly from the front end 114 of ferrule 110, and a transition section located between the counter-bore section and the ferrule microhole. The front and rear ends 114, 116 define respective front and rear end faces of the ferrule 110 that generally extend in planes parallel or substantially parallel to each other but substantially perpendicular to a longitudinal axis which the ferrule bore 112 extends. In some embodiments, front end 114 may define an end face at a slight angle relative to the longitudinal axis A1 to provide, for example, an angled physical contact (APC) end face.

In some embodiments, ferrule 110 is made of zirconia or like materials. In some embodiments, ferrule 110 has a coefficient of thermal expansion of about 10⁻⁵/°C.

In some embodiments, as shown in FIG. 4, a bonding agent 118 may be pre-loaded or stored within ferrule 110 (e.g., bonding agent 118 may be pre-loaded into the ferrule bore 112 by the manufacturer of ferrule 110) for a significant amount of time (e.g., at least an hour, a day, a year, etc.) before inserting optical fiber 100 (FIG. 1) into ferrule bore 112. As shown, bonding agent 118 is located partially within ferrule 110 with a portion of bonding agent 118 extending outwardly beyond rear end face 116. External portion of bonding agent 118 provides additional stability and strain relief for optical fiber 100 when inserted into ferrule bore 112 as discussed below. In some embodiments, bonding agent 118 is not included in ferrule bore 112 as discussed below.

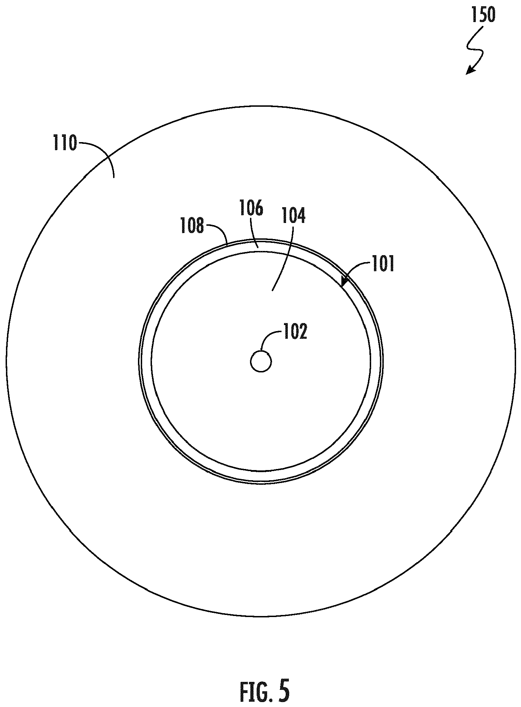

Referring to FIGS. 4-6, optical fiber 100 is inserted into ferrule 110 that includes bonding agent 118. As shown in FIG. 4, bonding agent 118 is positioned between and contacts polymer coating 106 (FIG. 5) of optical fiber 100 and an inner surface of ferrule bore 112. Optical fiber 100, which extends throughout optical fiber cable assembly 150 may further be enclosed by a protective tube (not shown) or a second protector layer (not shown) that is applied after the termination process.

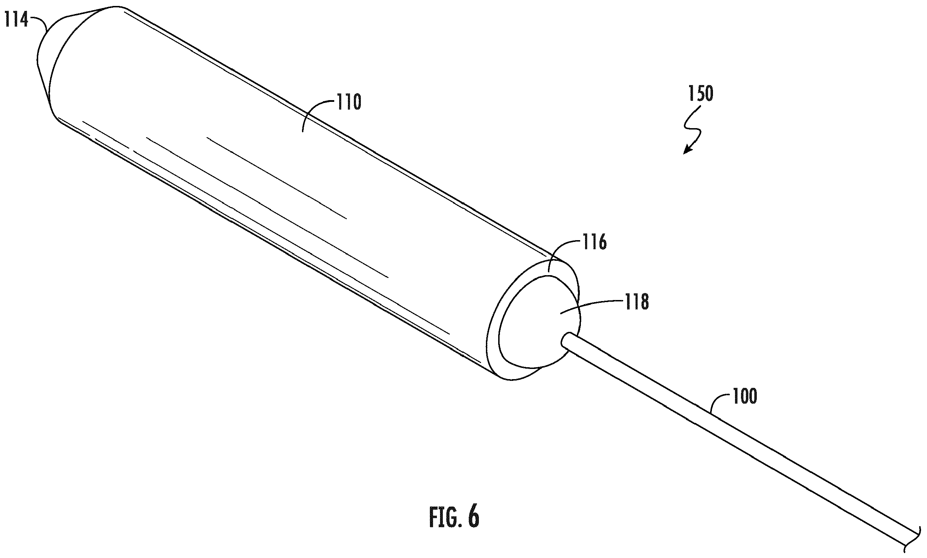

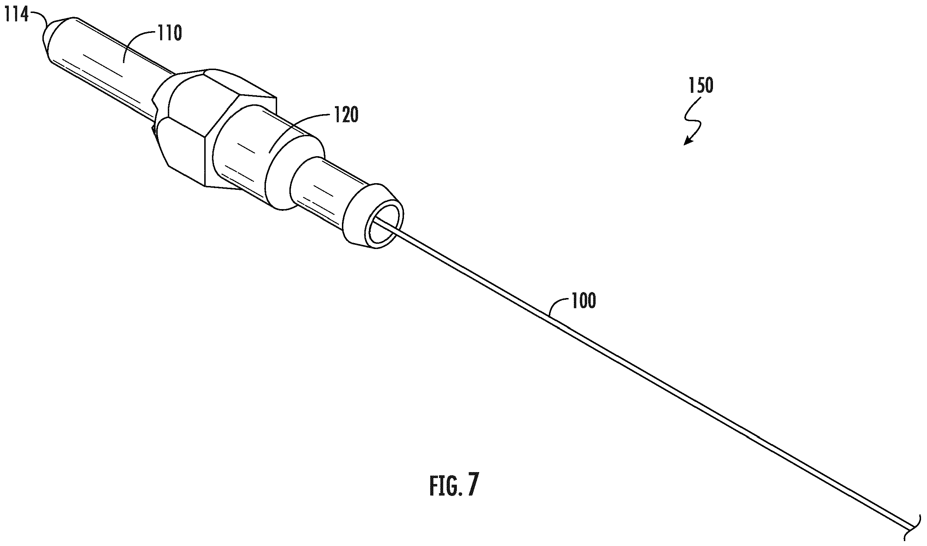

FIG. 6 shows a rear perspective view of optical fiber 150 shown in FIGS. 4 and 5. As mentioned previously, bonding agent 118 is located partially within ferrule 110 with a prior of bonding agent 118 extending outwardly beyond rear end face 116. External portion of bonding agent 118 provides additional stability and strain relief for optical fiber 100 when inserted into ferrule bore 112. In some embodiments, ferrule 110 is pre-assembled with a ferrule holder 120 (also referred to as a "hub" or "flange"), as shown in FIG. 7. Bonding agent 118 is dispensed into rear end 116 and ferrule bore 112 of ferrule 110 through ferrule holder 120. As discussed in greater detail below, optical fiber 100 is directly inserted into ferrule bore 112 without stripping.

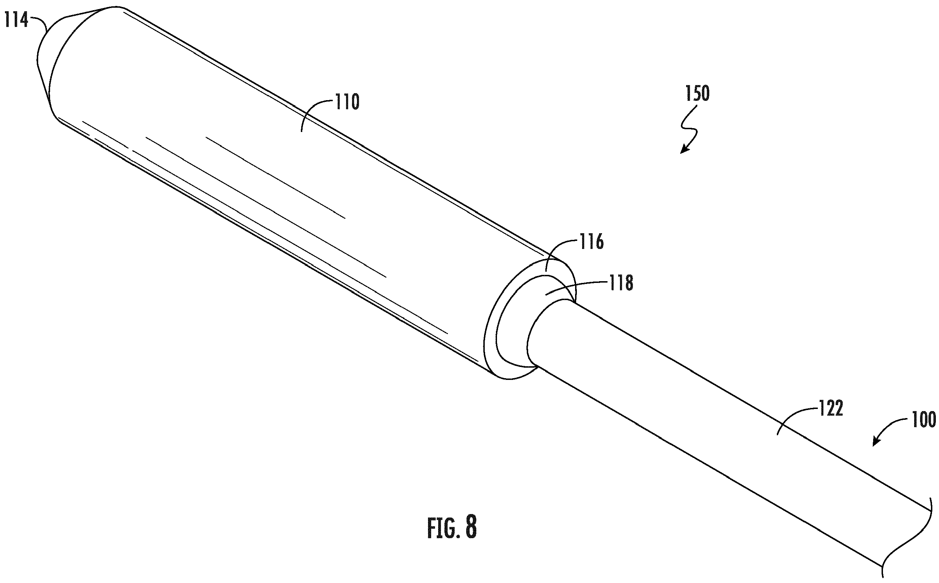

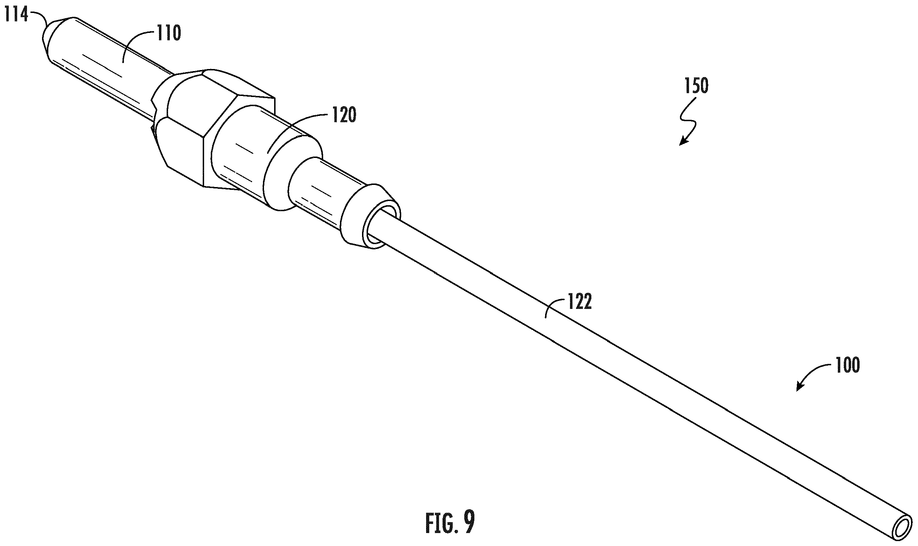

In another embodiment, as shown in FIG. 8, optical fiber 100 has been inserted into ferrule 110, and optical fiber 100 is protected by a protective tube 122. Protective tube 122 is configured to allow easy handing of fiber by acting as a strength member to provide additional stability and protection to optical fiber 100. In some embodiments, protective tube 122 is a loose tube cable that includes strength members such as aramid yarn. In some embodiments, protective tube 122 has an outer diameter ranging between 0.5 mm and 3.0 mm, 0.5 mm and 2.0 mm, or 0.5 mm and 1.5 mm. The edge of protective tube 122 is bonded to rear end 116 of ferrule bore 112 as shown. Referring now to FIG. 9, optical fiber 100 is within loose tube cable 122 that is bonded to ferrule 100 with ferrule holder 120.

In another embodiment, protective tube 122 is crimped to a connector housing (not shown) in which ferrule holder 120 is disposed.

### Properties of Optical Fiber Connector Assembly 150

In some embodiments, optical fiber connector assembly 150 has an insertion loss ranging between 0.1 dB and 1.5 dB, 0.1 dB and 1.0 dB, or 0.1 dB and 0.75 dB at a reference wavelength of 1310 nm or 1550 nm. In some embodiments, the insertion loss of optical fiber connector assembly 150 corresponds with insertion losses associated with Grade B and Grade C connectors as established by The International Electrotechnical Commission (IEC). Also, as mentioned previously, in some embodiments, when optical fiber 101 is inserted into ferrule 110 (FIG. 4) to form optical fiber connector assembly 150, a core-to-ferrule concentricity can be less than 5 microns, less than 1 microns, or less than 0.5 microns. In one embodiment, the core to ferrule concentricity is less than 0.5 microns.

### Method of Assembling Optical Fiber Connector Assembly 150

To assemble optical fiber connector assembly 150 with an optical fiber 100 (FIG. 1), heat is applied to ferrule 110 to bring ferrule 110 to a heated state. Heat from a heating source (not shown, e.g., a heating port) is applied onto an outer surface 111 of ferrule 110 at a heating temperature such that bonding agent 118 (that is present within ferrule bore 112) melts and ferrule 110 expands. In some embodiments, the heating temperature at which heat is applied onto outer surface 111 is up to 100°C, up to 150°C, or up to 200°C. As mentioned previously, when heat is applied onto outer surface 111, ferrule 110 expands. Specifically, ferrule bore 112 (e.g., including ferrules with a counter-bore section and/or ferrule microhole) expand. In addition, when heated, the diameter of ferrule bore 112 (e.g., including ferrules with a counter-bore section and/or ferrule microhole) are greater than the outer diameter of optical fiber 100 to facilitate insertion of optical fiber 100 within ferrule 110 as discussed below. In comparison to the coefficient of thermal expansion (CTE) of ferrule 110, the CTE of optical fiber 100 (e.g., glass, silica glass, etc.) is small and therefore, the diameter change of optical fiber 110 when heat is applied (to ferrule 110) is small compared to the diameter change of ferrule 110 (e.g., including a ferrule microhole and counter-bore section). In some embodiments, ferrule 110 includes a counter-bore section and a ferrule microhole, and when heat is applied the respective diameters of the counter-bore section and the ferrule microhole increase to accommodate insertion of optical fiber 100.

Once ferrule 110 is in the heated state, optical fiber 100 is inserted into ferrule 110 through rear end 116 and through melted bonding agent 118 such that at least a portion of optical fiber 100 protrudes outwardly from front end 114 of ferrule 110. In embodiments where ferrule 110 includes a counter bore section and a ferrule microhole, optical fiber 100 is inserted through a counter-bore section, through melted bonding agent 118, through a transition section between the counter bore section and the ferrule microhole, and through expanded ferrule microhole such that at least a portion of optical fiber 100 protrudes outwardly from front end 114 of ferrule 110 and at least a portion of bonding agent 118 is within the ferrule microhole.

After optical fiber 100 is inserted into ferrule 110, heat is no longer applied onto ferrule 110 such that ferrule 110 transitions to a cooled state. In the cooled state, ferrule bore 112 of ferrule 110 contracts to substantially its original configuration prior to heating. In embodiments where ferrule 110 includes a counter bore section and a ferrule microhole, in the cooled state, counter-bore section and ferrule microhole contract to substantially the configuration prior to heating. The contraction of ferrule bore 112 of ferrule 110 results in an interference fit or close fit between the previously inserted optical fiber 100 and ferrule bore 112 with bonding agent 118 between optical fiber 100 and an inner wall of ferrule bore 112. In embodiments where ferrule 110 includes a ferrule microhole, the contraction of the ferrule microhole results in an interference fit or close fit between the previously inserted optical fiber 100 and the ferrule microhole with bonding agent 118 between optical fiber 100 and an inner wall of the ferrule microhole.

Advantageously, reducing the diameter of the ferrule bore or the ferrule microhole (to form an interference fit or close fit configuration with optical fiber 100) assists with positioning of optical fiber 100 in ferrule bore 112 or the ferrule microhole by keeping optical fiber 100 more centered within ferrule 110 thereby, reducing the insertion loss when connecting optical fibers 100 to one another.

As mentioned previously, in some embodiments, ferrule 110 does not include bonding agent 118 within ferrule bore 112. In such embodiments, to assemble optical fiber connector assembly 150, heat is applied to an optical fiber 100 that includes secondary hot melt coating 108. That is, during the insertion of optical fiber 100 into ferrule 110, ferrule 110 is heated to a melting temperature of secondary hot melt coating 108. As mentioned previously, in some embodiments, secondary hot melt coating 108 has a melting temperature that is lower than the melting temperature of polymer coating 106. In this way, polymer coating 106 does not degrade at the heated temperature of ferrule 110. Then, optical fiber 100 is inserted into ferrule bore 112, and the molten secondary hot melt coating 108 bonds optical fiber 100 to inner surface of ferrule bore 112.

### Example 1

A coated optical fiber 100 with a cladding 104 having a diameter of 115 microns and a polymer coating 106 having a diameter of 124.5 microns was fabricated. The coating material was made of a clear UV-curable acrylate hard coat with the addition of 1 wt.% (3-mercaptopropyl) trimethoxysilane. The coating has a glass transition temperature (DMA) of 115°C. The coating material has modulus of 1.5GPa, hardness (Shore D) of 95, and pencil hardness of 6H to 8H on Polymethylmethacrylate (PMMA) film. Because of the high modulus and hardness of the coating, the geometric dimensions of the coating are unaffected by the handling process.

The optical fiber was placed inside a 0.7 mm diameter outer diameter protection tube, with the fiber extending about 15 mm from either end of the tube. Without stripping, the thin coated optical fiber was directly inserted into a ferrule 110 inside a LC connector housing which was prefilled with adhesive for bonding. The insertion of the coated optical fiber was stopped when the edge of the protection tube reached the rear end of the ferrule. After the adhesive was cured, the excess length of optical fiber protruding beyond the front end of the ferrule was removed - leaving a very short fiber stub similar to a standard connector termination process. A polishing process removed any lingering shreds of polymer coating protruding beyond the front end of the ferrule. In the finished optical fiber assembly, the coating ring is slightly recessed below the end faces of the glass fiber and the ferrule.

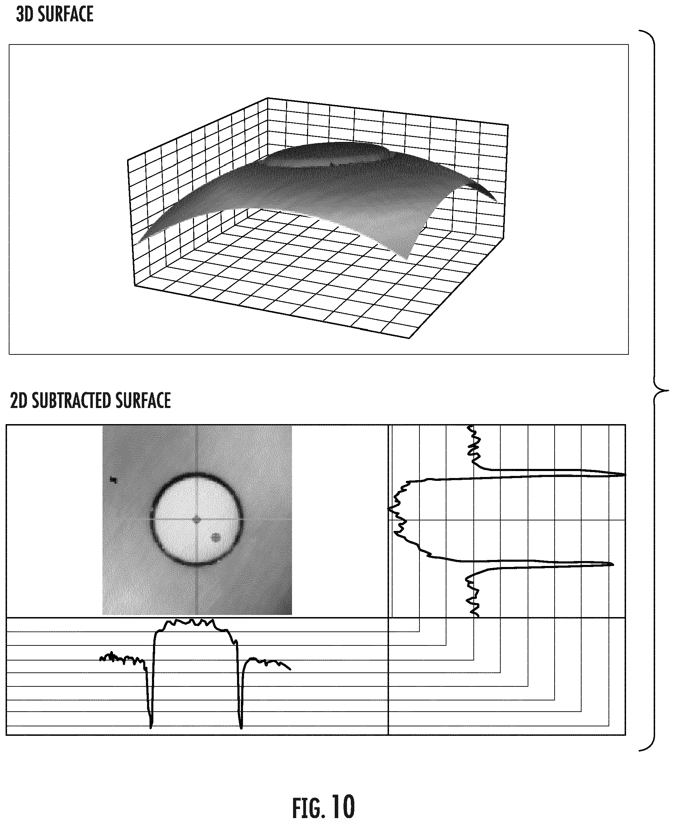

The measured end face geometry of an optical fiber assembly for a typical LC connector is depicted in FIG. 10. As shown, the fiber height relative to the ferrule end face is consistently in the range of between 10 nm to 50 nm. The thin coating ring is slightly recessed relative to the end face of the ferrule. The radius of curvature and apex offset also meets the specifications of standard physical contact connectors.

The insertion loss (e.g., return loss) of the assembled connector was about -55 dB. This is comparable to standard LC connectors known in the art.

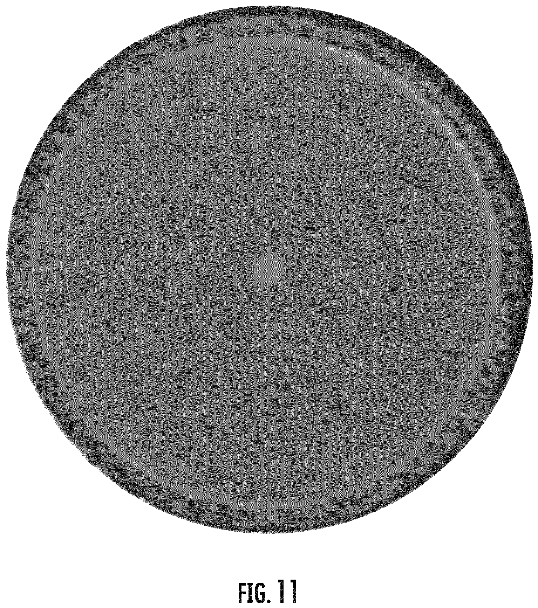

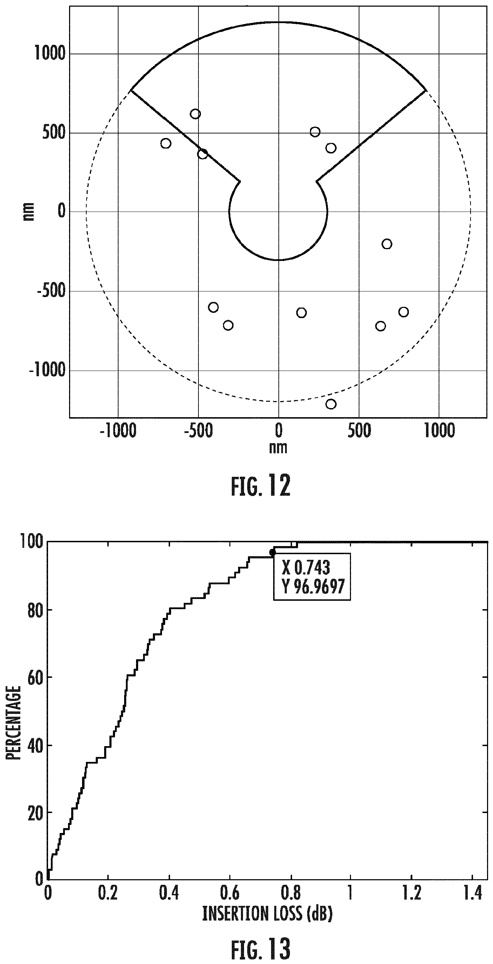

The core to ferrule eccentricities of 12 assembled LC connectors with the optical fiber of this Example (i.e., with the polymer coating 106 applied) were measured and the results are shown in FIG. 12. As shown, the maximum core-to-ferrule concentricity of the assembled connectors was less than 1.2 microns - suggesting that the thin polymer coating has good uniformity. One source potentially contributing to the core-to-ferrule concentricity is the size of the coated optical fiber. As shown in FIG. 11, an adhesive crescent is visible, which indicates that the coated optical fiber is biased to one side of the ferrule bore when inserted and may explain the lack of connector samples having a concentricity lower than 500 nm.

Referring now to FIG. 13, insertion loss between assembled connectors was simulated based on measured core-to-ferrule concentricity. As shown in the insertion loss distribution model, the maximum insertion loss for 97 percent of the assembled connector population is about 0.74 dB at a reference wavelength of 1310 nm.

### Example 2

In Example 1, there was a relatively large difference between the inner diameter of the ferrule and the outer diameter of the coated optical fiber. In this Example, the difference between the inner diameter of the ferrule and the outer diameter of the coated optical fiber was limited. The outer diameter of the coated optical fiber was controlled to 125.22 microns, and a new set of LC connector ferrules with inner diameters of 125.5 microns were used.

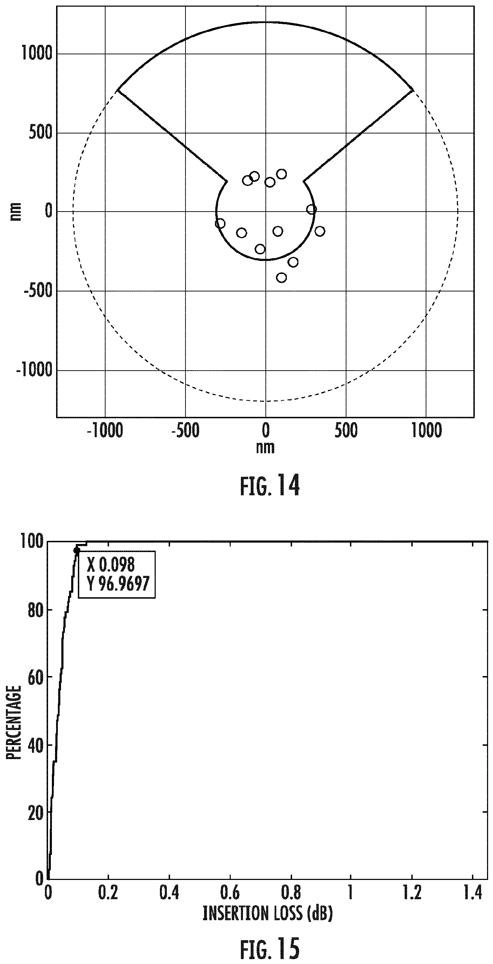

Referring to FIG. 14, the core-to-ferrule concentricity distribution of the assembled connectors is shown. As can be seen, the core to ferrule eccentricities are generally localized and have relatively low values. In addition, the simulated insertion loss distribution of the assembled connector samples, as shown in FIG. 15, indicates that 97% of the assembled connector population had a maximum insertion loss of about 0.10 dB.

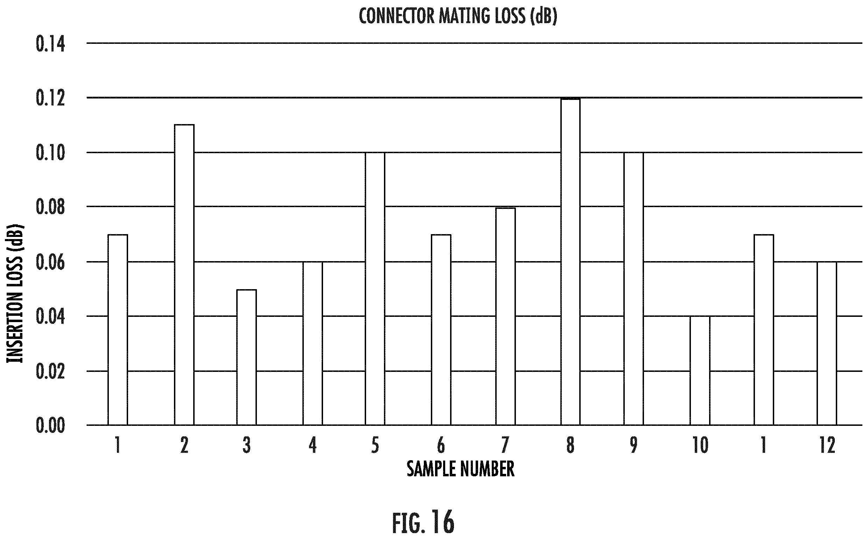

The simulated insertion loss distribution was confirmed by the measurement of 12 random connections between assembled connectors as shown in FIG. 16. As shown, most of the samples yielded an insertion loss of less than 0.10 dB at a reference wavelength of 1310 nm.

### Examples with thin coating 106 of optical fiber 100 being colored

Referring to FIG. 17A, multiple optical fibers 100 according to this disclosure may be included as part of a common, multi-fiber cable assembly. The optical fibers 100 may be contained in a jacket of the cable assembly in a "loose" format, or may be continuously or intermittently bonded so as to be held in an array (i.e., ribbonized to form an optical fiber ribbon 100'). Optical fiber ribbons 100' can terminate multifiber ferrules such as those included in multifber connector 125 as shown in FIG. 17B to form the multi-fiber cable assembly. In some embodiments, the multi-fiber cable assembly includes an optical fiber ribbon 100' with groups of optical fibers 100 collectively terminating a multi fiber ferrule on one end of the optical fibers 100 and on the other end, the optical fibers may individually terminate respective single fiber ferules such as those shown in optical fiber assembly 150 (FIG. 9).

The optical fibers of the Examples below are colored. As mentioned previously, in some embodiments, the optical fibers described above can be coated in up to 16 different colors. Having colored fibers within connectors and cable assemblies enable easy fiber identification during connector or cable assembly maintenance purposes whereby the connector or connector assembly does not need to be disassembled to identify the optical fiber(s). In addition, the ability to visually inspect the inserted optical fiber(s) 100 enable faster testing and more efficient connector processing (i.e., no need for connector disassembly for optical fiber processing).

As mentioned above, in some embodiments polymer coating 106 comprises a hard coating, a dye concentrate, and an adhesion promoter. The dye concentrate provides the color to polymer coating 106 and does not decompose the silane in the adhesion promoter; thereby, maintaining the adhesive properties of polymer coating 106. Aside from enabling easy fiber identification as described above, another advantage of colored polymer coated optical fibers 100 is that the colored optical fibers 100 can provide polarity information and can instruct connector assembly such that a particular polarity can be achieved for a connector. In particular, the color of coating 106 can be observed from the connector end face via a microscope. Due to a pre-existing relationship between the color of polymer coating 106 and the polarity of the optical fiber 100, the polarity of connector assembly can be controlled without accessing or manipulating the connector body. That is, certain optical fiber(s) 100 with polymer coating 106 can be inserted into particular connector bores such that a particular polarity is achieved for connector assembly.

Various Examples of optical fibers 100 with polymer coating 106 being colored will now be described.

In Examples below, samples were generally prepared by mixing components of the formulation for polymer coating 106 and then filtering the mixture to prepare the polymer coating 106. The polymer coating 106 was then applied to the glass fiber 101 via a fiber draw process.

### Example 3

Referring now to Table 1 below, Sample 1 and Sample 2 were prepared differently as described herein. In particular, Sample 2 included a filtration step of the coating mixture while Sample 1 did not include such a filtration step as described below. In this Example, Sample 1 comprised of a coating formulation having 97 wt% of hard acrylic coating (e.g., HC-5619) with 3 wt% dye concentrates (e.g., 9W2330 8.984: 9B1088 1.281 as manufactured by Penn Color Inc.) and 2 parts per hundredth (pph) of an adhesion promoter (e.g., 3-Mercaptopropyl)trimethoxysilane). The coating formulation was mixed using roller mixing where the dye concentrates (9W2330 and 9B1088) were kept on a roller for one day; then, 380 grams of the acrylic coating (e.g., HC-5619) and 10.31 grams of a white dye concentrate (e.g., 9W2330 as manufactured by Penn Color, Inc.) and 1.47 grams of a black dye concentrate (e.g., 9B1088 as manufactured by Penn Color, Inc.) were mixed for 4 days. Then, 7.60 grams of the adhesion promoter (e.g., (3-Mercaptopropyl)trimethoxysilane) were mixed into the formulation on a vortex for 10 minutes and then kept on a roller overnight. The resulting formulation was used during the optical fiber draw to apply the coating formulation onto the optical fiber.

Sample 2 comprised of a coating formulation having a white dye concentrate (e.g., 9W2330 as manufactured by Penn Color, Inc.) and a black dye concentrate (e.g., 9B1088 as manufactured by Penn Color, Inc.) that were kept on a roller for one day; then, 380 grams of a hard acrylate coating (e.g., HC-5619 as manufactured by Addison Clear Wave Coatings Incorporated) and 10.31 grams of the white dye concentrate (e.g., 9W2330 as manufactured by Penn Color, Inc.) and 1.47 grams of the black dye concentrate (e.g., 9B1088 as manufactured by Penn Color, Inc.) were mixed at 55°C overnight by using a mixing blade. After that, 7.60 grams of the adhesion promoter (e.g., (3-Mercaptopropyl)trimethoxysilane) was added and mixed for one hour at room temperature followed by filtration of the formulation using a 3microns filter to form the filtered formulation. The filtered formulation was used during the optical fiber draw to apply the coating formulation onto the optical fiber.

**Table 1**

| Reel Properties | Sample 1 | Sample 2 |
|---|---|---|
| 3 Micron Filtration | No | Yes |
| Glass diameter (microns) | 108.9 | 107.5 |
| Fiber Draw Speed (m/min) | 60 | 70 |
| Fiber Length (m) | 10500 | 10500 |
| Coating Outer Diameter (microns) | 124.8 | 125.7 |
| Coating concentricity | 91% | 80% |
| Curing Degree | 87% | 87% |
| Screening at 50 kpsi | Unable to screen | 4 breaks |
| Longest Saved Length (m) | N/A | 7830 |

As mentioned previously, Sample 2 had the same coating formulation as Sample 1 described above; however, the coating of Sample 2 was prepared with high shearing mechanical stirring with heat mixing followed by filtration by a 3 micron filter. As shown in Table 1 above, Sample 2 passed fiber screening at 50 kpsi with a longest saved length of 7830 meters while Sample 1 did not pass fiber screening with no meaningful saved length. As used herein, "fiber screening" refers to mechanical testing of the optical fiber where predetermined tension (e.g., 50 kpsi in this Example) is applied onto the optical fiber to test a minimum strength of the optical fiber and eliminate the flaws of the optical fibers that propagate when tension is applied during fiber screening - by fiber screening, the weak points of the optical fiber are eliminated as the optical fiber breaks at the weak points along the length of the optical fiber. The test method employed was in accordance with IEC 60793-1-30. To increase the adhesion of each sample shown, the coating of the optical fiber samples included an adhesion promoter; in particular, 2 wt% of (3-Mercaptopropyl)trimethoxysilane was added into each of the coating formulations.

### Example 4

In Examples 4-9 described herein, optical fibers with a colored outer diameter were tested within optical fiber connectors. In particular, the optical fibers had an outer diameter of about 125 microns ± 0.3 microns as discussed above. As mentioned above, the optical fibers were coated with a colored layer (e.g., HC-5619 as manufactured by Addison Clear Wave Coatings Incorporated) and tested under various conditions for fiber movement properties. In particular, the fiber movement of the optical fiber samples within the connector were measured under the following conditions: (1) post epoxy curing with an epoxy compound (e.g., EPO-TEK 353) at 150°C for 1 hour, (2) after a 10 mates test, and (3) after completion of a -10C to 60C thermal cycle test (post 10 mates test). As used herein, a "10 mates test" refers to fiber movement testing of a connector with the optical fiber sample after the connector is mated to another connector ten (10) times at room temperature without thermal cycling. The fiber movement data were then compared to samples having an optical fiber that has a uncolored coating with an outer diameter of 125 microns ± 0.3 microns and/or uncoated samples. The fiber movement test of Examples 4-9 were performed in accordance with IEC 61755-3-1.

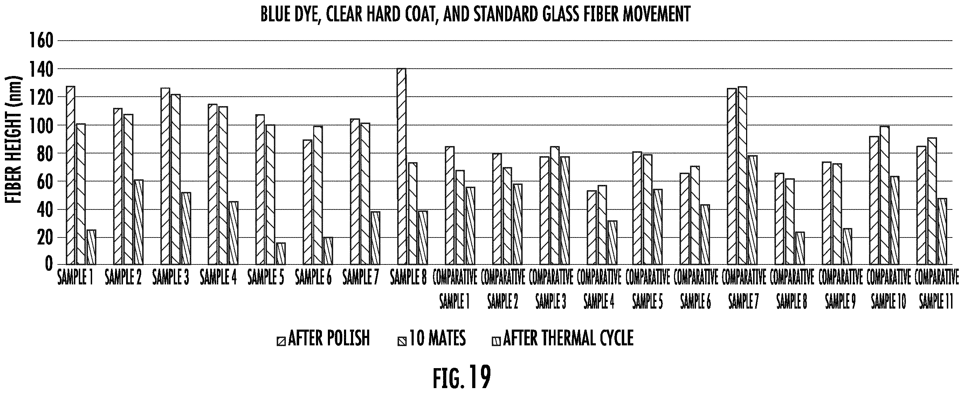

Referring to FIG. 19, the optical fiber samples had a blue dye coating indicated as Samples 1-8 in the graph.

The coatings of the samples were colored and comprised a highly mixed thin coating formulations. In particular, the coating formulations for Samples 1-8 were made by mixing a hard acrylate coating formulation (e.g., HC-5619 as manufactured by Addison Clear Wave Coatings Incorporated) with one or more dye concentrates in acrylates (e.g., 9S1785 as manufactured by Penn Color, Inc.). The composition of Samples 1-8 comprised 97 wt.% hard acrylate coating formulation, 3 wt.% dye concentrate, and 2 parts per hundredth (pph) of the adhesion promoter.

To prepare the formulation, 380 grams of the acrylate hard coating (HC-5619 as manufactured by Addison Clear Wave Coatings Incorporated) and 11.78 grams of the dye concentrate (9S1785 as manufactured by Penn Color, Inc.) were premixed for 5 hours at 55°C by using a Jiffy mixing blade. Then, 7.60 grams of the adhesion promoter ((3-Mercaptopropyl)trimethoxysilane) were added to the mixture and stirred at room temperature overnight. Mechanical stirring was employed to mix the hard coating formulation with the one or more dye concentrates in acrylate. This step was followed by a filtration step where a filter (less than or equal to 3 microns) was used to mitigate dye aggregation in the formulation. A subsequent fiber draw was done resulting in the dyed coated optical fiber sample.

Comparative Samples 1-7 comprised a thin coating that is uncolored/clear, and Comparative Samples 8-11 comprised an uncoated fiber (that was stripped prior to insertion into a connector).

As shown in FIG. 19, the fiber movement data of Samples 1-8 are similar in performance to Comparative Samples 1-7 (uncolored coated optical fibers) and Comparative Samples 8-11 (uncoated optical fiber) with respect to IEC standard 61755-3-1, thereby indicating its potential use in connector applications.

### Example 5

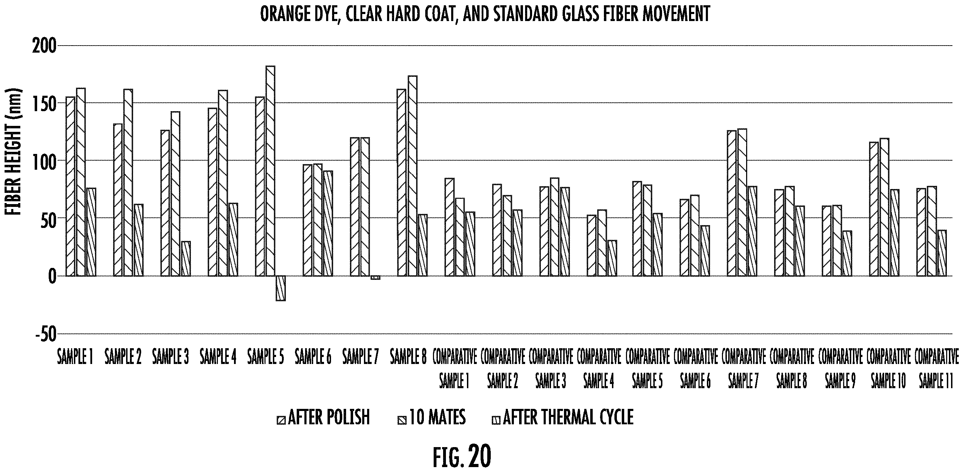

Referring now to FIG. 20, the optical fiber samples had an orange dye coating indicated as Samples 1-8 in the graph.

The coatings of the samples were colored and comprised a highly mixed thin coating formulations. In particular, the coating formulations for Samples 1-8 were made by mixing a hard acrylate coating formulation (e.g., HC-5619 as manufactured by Addison Clear Wave Coatings Incorporated) with one or more dye concentrates in acrylates (e.g., 9Y804 as manufactured by Penn Color, Inc.). The composition of Samples 1-8 comprised 97 wt.% hard acrylate coating formulation, 3 wt.% dye concentrate, and 2 parts per hundredth (pph) of the adhesion promoter.

To prepare the formulation, 380 grams of the acrylate hard coating (HC-5619 as manufactured by Addison Clear Wave Coatings Incorporated) and 11.78 grams of the dye concentrate (9S1785 as manufactured by Penn Color, Inc.) were premixed for 5 hours at 55°C by using a Jiffy mixing blade. Then, 7.60 grams of the adhesion promoter ((3-Mercaptopropyl)trimethoxysilane) were added to the mixture and stirred at room temperature overnight. Mechanical stirring was employed to mix the hard coating formulation with the one or more dye concentrates in acrylate. This step was followed by a filtration step where a filter (less than or equal to 3 microns) was used to mitigate dye aggregation in the formulation. A subsequent fiber draw was done resulting in the dyed coated optical fiber sample.

Comparative Samples 1-7 comprised a thin coating that is uncolored/clear, and Comparative Samples 8-11 comprised an uncoated fiber (that was stripped prior to insertion into a connector).

As shown in FIG. 20, the fiber movement data of Samples 1-8 are similar in performance to Comparative Samples 1-7 (uncolored coated optical fibers) and Comparative Samples 8-11 (uncoated optical fiber) with respect to IEC standard 61755-3-1, thereby indicating its potential use in connector applications.

### Example 6

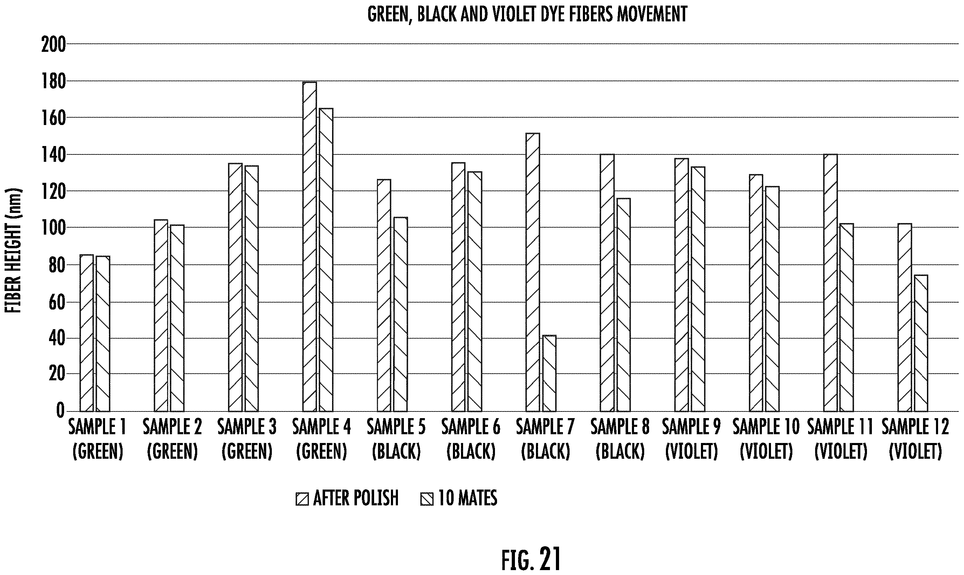

Referring now to FIG. 21, the optical fiber samples had a green, black, or violet dye coating as indicated on FIG. 21.

The coatings of the samples were colored and comprised a highly mixed thin coating formulations. In particular, the coating formulations for Samples 1-12 were made by mixing a hard acrylate coating formulation (e.g., HC-5619 as manufactured by Addison Clear Wave Coatings Incorporated) with one or more dye concentrates in acrylates (e.g., 9G1130, 9B1088, and 9S949D for green, black, and violet, respectively, as manufactured by Penn Color, Inc.). The composition of Samples 1-12 comprised 97 wt.% hard acrylate coating formulation, 3 wt.% dye concentrate, and 2 parts per hundredth (pph) of the adhesion promoter.

To prepare the green dye coating samples, 380 grams of the acrylate hard coating (HC-5619 as manufactured by Addison Clear Wave Coatings Incorporated) and 11.78 grams of the dye concentrate (9G1130 as manufactured by Penn Color, Inc.) were premixed for 5 hours at 55°C by using a Jiffy mixing blade. Then, 7.60 grams of the adhesion promoter ((3-Mercaptopropyl)trimethoxysilane) were added to the mixture and stirred at room temperature overnight. Mechanical stirring was employed to mix the hard coating formulation with the one or more dye concentrates in acrylate. This step was followed by a filtration step where a filter (less than or equal to 3 microns) was used to mitigate dye aggregation in the formulation. A subsequent fiber draw was done resulting in the dyed coated optical fiber sample.

To prepare the black dye coating samples, 380 grams of the acrylate hard coating (HC-5619 as manufactured by Addison Clear Wave Coatings Incorporated) and 11.78 grams of the dye concentrate (9B1088 as manufactured by Penn Color, Inc.) were premixed for 5 hours at 55°C by using a Jiffy mixing blade. Then, 7.60 grams of the adhesion promoter ((3-Mercaptopropyl)trimethoxysilane) were added to the mixture and stirred at room temperature overnight. Mechanical stirring was employed to mix the hard coating formulation with the one or more dye concentrates in acrylate. This step was followed by a filtration step where a filter (less than or equal to 3 microns) was used to mitigate dye aggregation in the formulation. A subsequent fiber draw was done resulting in the dyed coated optical fiber sample.

To prepare the violet dye coating samples, 380 grams of the acrylate hard coating (HC-5619 as manufactured by Addison Clear Wave Coatings Incorporated) and 11.78 grams of the dye concentrate (9S949D as manufactured by Penn Color, Inc.) were premixed for 5 hours at 55°C by using a Jiffy mixing blade. Then, 7.60 grams of the adhesion promoter ((3-Mercaptopropyl)trimethoxysilane) were added to the mixture and stirred at room temperature overnight. Mechanical stirring was employed to mix the hard coating formulation with the one or more dye concentrates in acrylate. This step was followed by a filtration step where a filter (less than or equal to 3 microns) was used to mitigate dye aggregation in the formulation. A subsequent fiber draw was done resulting in the dyed coated optical fiber sample.

As shown in FIG. 21, the fiber movement data of Samples 1-12 are similar in performance among Samples 1-12 and similar in performance to the data shown in FIGS. 19 and 20 for Comparative Samples 1-7 (uncolored coated optical fibers) and Comparative Samples 8-11 (uncoated optical fiber) with respect to IEC standard 61755-3-1, thereby indicating its potential use in connector applications.

### Example 7

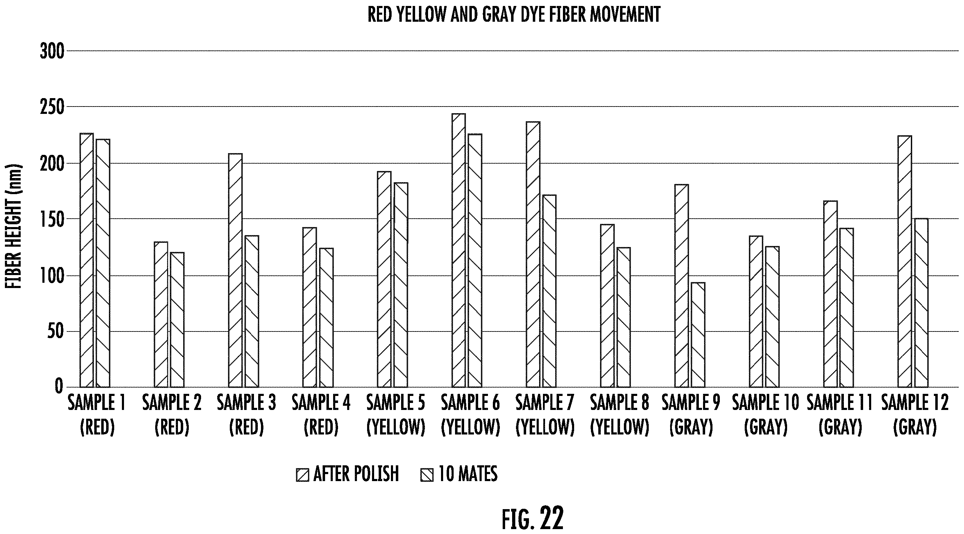

Referring now to FIG. 22, the optical fiber samples had a red, yellow, or gray dye coating as indicated on FIG. 22.

The coatings of the samples were colored and comprised a highly mixed thin coating formulations. In particular, the coating formulations for Samples 1-12 were made by mixing a hard acrylate coating formulation (e.g., HC-5619 as manufactured by Addison Clear Wave Coatings Incorporated) with one or more dye concentrates in acrylates (e.g., 9R925, 9Y1581, and a mixture of 9W2330 and 9B1088 for red, yellow, and gray, respectively, as manufactured by Penn Color, Inc.). The composition of Samples 1-12 comprised 97 wt.% hard acrylate coating formulation, 3 wt.% dye concentrate, and 2 parts per hundredth (pph) of the adhesion promoter.

To prepare the red dye coating samples, 380 grams of the acrylate hard coating (HC-5619 as manufactured by Addison Clear Wave Coatings Incorporated) and 11.78 grams of the dye concentrate (9R925 as manufactured by Penn Color, Inc.) were premixed for 5 hours at 55°C by using a Jiffy mixing blade. Then, 7.60 grams of the adhesion promoter ((3-Mercaptopropyl)trimethoxysilane) were added to the mixture and stirred at room temperature overnight. Mechanical stirring was employed to mix the hard coating formulation with the one or more dye concentrates in acrylate. This step was followed by a filtration step where a filter (less than or equal to 3 microns) was used to mitigate dye aggregation in the formulation. A subsequent fiber draw was done resulting in the dyed coated optical fiber sample.

To prepare the yellow dye coating samples, 380 grams of the acrylate hard coating (HC-5619 as manufactured by Addison Clear Wave Coatings Incorporated) and 11.78 grams of the dye concentrate (9Y1581 as manufactured by Penn Color, Inc.) were premixed for 5 hours at 55°C by using a Jiffy mixing blade. Then, 7.60 grams of the adhesion promoter ((3-Mercaptopropyl)trimethoxysilane) were added to the mixture and stirred at room temperature overnight. Mechanical stirring was employed to mix the hard coating formulation with the one or more dye concentrates in acrylate. This step was followed by a filtration step where a filter (less than or equal to 3 microns) was used to mitigate dye aggregation in the formulation. A subsequent fiber draw was done resulting in the dyed coated optical fiber sample.

To prepare the gray dye coating samples, 760 grams of the acrylate hard coating (HC-5619 as manufactured by Addison Clear Wave Coatings Incorporated) and 23.56 grams of the dye concentrate (a mixture of 9W2330 and 9B1088 (in an 8.984:1.281 ratio of 9W2330:9B1088) as each individually manufactured by Penn Color, Inc.) were premixed for 5 hours at 55°C by using a Jiffy mixing blade. Then, 15.20 grams of the adhesion promoter ((3-Mercaptopropyl)trimethoxysilane) were added to the mixture and stirred at room temperature overnight. Mechanical stirring was employed to mix the hard coating formulation with the one or more dye concentrates in acrylate. This step was followed by a filtration step where a filter (less than or equal to 3 microns) was used to mitigate dye aggregation in the formulation. A subsequent fiber draw was done resulting in the dyed coated optical fiber sample.

As shown in FIG. 22, the fiber movement data of Samples 1-12 are similar in performance among Samples 1-12 and similar in performance to the data shown in FIGS. 19 and 20 for Comparative Samples 1-7 (uncolored coated optical fibers) and Comparative Samples 8-11 (uncoated optical fiber) with respect to IEC standard 61755-3-1, thereby indicating its potential use in connector applications.

### Example 8

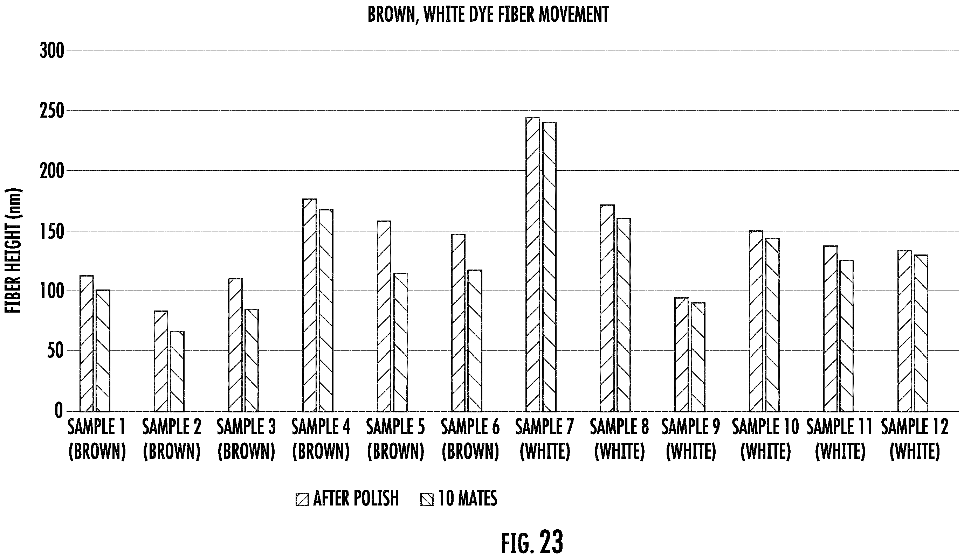

Referring now to FIG. 23, the optical fiber samples had a brown or white dye coating as indicated on FIG. 23.

The coatings of the samples were colored and comprised a highly mixed thin coating formulations. In particular, the coating formulations for Samples 1-12 were made by mixing a hard acrylate coating formulation (e.g., HC-5619 as manufactured by Addison Clear Wave Coatings Incorporated) with one or more dye concentrates in acrylates (e.g., a mixture of 1.877 wt.% 9W2330, 2.504 wt.% 9S949D, and 7.511 wt.% 9Y804; and 9W2330 for brown and white, respectively, as manufactured by Penn Color, Inc.). The composition of Samples 1-12 comprised 97 wt.% hard acrylate coating formulation, 3 wt.% dye concentrate, and 2 parts per hundredth (pph) of the adhesion promoter.

To prepare the brown dye coating samples, 760 grams of the acrylate hard coating (HC-5619 as manufactured by Addison Clear Wave Coatings Incorporated) and 23.505 grams of the dye concentrate (a mixture of 9W2330, 9S949D, and 9Y804 (in a 1.877: 2.504:7.511 ratio of 9W2330:9S949D:9Y804) as each individually manufactured by Penn Color, Inc.) were premixed for 1 day at 55°C by using a Jiffy mixing blade. Then, 15.20 grams of the adhesion promoter ((3-Mercaptopropyl)trimethoxysilane) were added to the mixture and stirred at room temperature overnight. Mechanical stirring was employed to mix the hard coating formulation with the one or more dye concentrates in acrylate. This step was followed by a filtration step where a filter (less than or equal to 3 microns) was used to mitigate dye aggregation in the formulation. A subsequent fiber draw was done resulting in the dyed coated optical fiber sample.

To prepare the white dye coating samples, 380 grams of the acrylate hard coating (HC-5619 as manufactured by Addison Clear Wave Coatings Incorporated) and 11.78 grams of the dye concentrate (9Y1581 as manufactured by Penn Color, Inc.) were premixed for 5 hours at 55°C by using a Jiffy mixing blade. Then, 7.60 grams of the adhesion promoter ((3-Mercaptopropyl)trimethoxysilane) were added to the mixture and stirred at room temperature overnight. Mechanical stirring was employed to mix the hard coating formulation with the one or more dye concentrates in acrylate. This step was followed by a filtration step where a filter (less than or equal to 3 microns) was used to mitigate dye aggregation in the formulation. A subsequent fiber draw was done resulting in the dyed coated optical fiber sample.

As shown in FIG. 23, the fiber movement data of Samples 1-12 are similar in performance among Samples 1-12 and similar in performance to the data shown in FIGS. 19 and 20 for Comparative Samples 1-7 (uncolored coated optical fibers) and Comparative Samples 8-11 (uncoated optical fiber) with respect to IEC standard 61755-3-1, thereby indicating its potential use in connector applications.

### Example 9

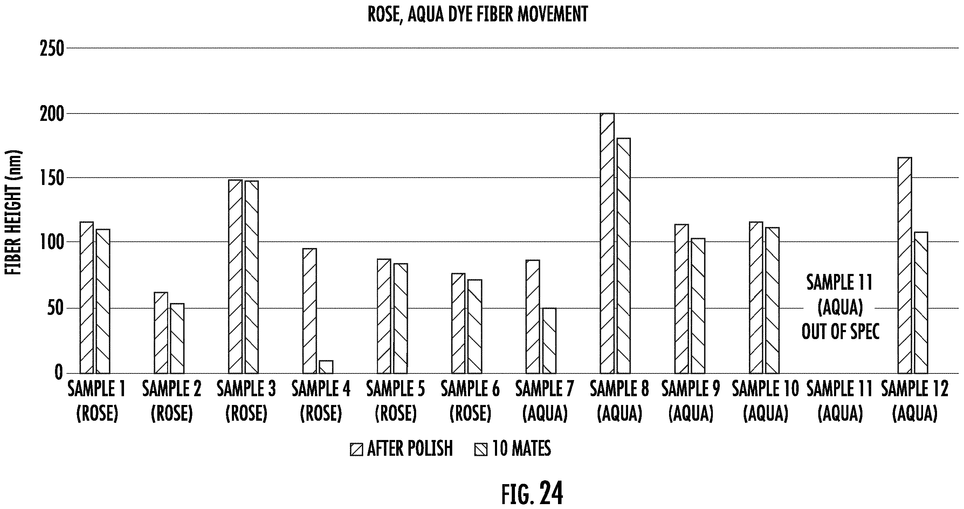

Referring now to FIG. 24, the optical fiber samples had a rose or aqua dye coating as indicated on FIG. 24.

The coatings of the samples were colored and comprised a highly mixed thin coating formulations. In particular, the coating formulations for Samples 1-12 were made by mixing a hard acrylate coating formulation (e.g., HC-5619 as manufactured by Addison Clear Wave Coatings Incorporated) with one or more dye concentrates in acrylates (e.g., a mixture of 9W2330 and 9R925; and a mixture of 9W2330, 9S1785, and 9G1130 for rose and aqua, respectively, as manufactured by Penn Color, Inc.). The composition of Samples 1-12 comprised 97 wt.% hard acrylate coating formulation, 3 wt.% dye concentrate, and 2 parts per hundredth (pph) of the adhesion promoter.

To prepare the rose dye coating samples, 380 grams of the acrylate hard coating (HC-5619 as manufactured by Addison Clear Wave Coatings Incorporated) and 11.78 grams of the dye concentrate (a mixture of 9W2330 and 9R925 (in an 8.370:1.050 ratio of 9W2330:9R925) as each individually manufactured by Penn Color, Inc.) were premixed for 5 hours at 55°C by using a Jiffy mixing blade. Then, 7.60 grams of the adhesion promoter ((3-Mercaptopropyl)trimethoxysilane) were added to the mixture and stirred at room temperature overnight. Mechanical stirring was employed to mix the hard coating formulation with the one or more dye concentrates in acrylate. This step was followed by a filtration step where a filter (less than or equal to 3 microns) was used to mitigate dye aggregation in the formulation. A subsequent fiber draw was done resulting in the dyed coated optical fiber sample.

To prepare the aqua dye coating samples, 760 grams of the acrylate hard coating (HC-5619 as manufactured by Addison Clear Wave Coatings Incorporated) and 23.505 grams of the dye concentrate (a mixture of 9W2330, 9S1785, and 9G1130 (in a 8.349:0.501:0.751 ratio of 9W2330:9S 1785 :9G 1130) as each individually manufactured by Penn Color, Inc.) were premixed for 5 hours at 55°C by using a Jiffy mixing blade. Then, 15.20 grams of the adhesion promoter ((3-Mercaptopropyl)trimethoxysilane) were added to the mixture and stirred at room temperature overnight. Mechanical stirring was employed to mix the hard coating formulation with the one or more dye concentrates in acrylate. This step was followed by a filtration step where a filter (less than or equal to 3 microns) was used to mitigate dye aggregation in the formulation. A subsequent fiber draw was done resulting in the dyed coated optical fiber sample.

In this Example, fiber movement testing was not done after thermal cycling as shown in previous Examples. As shown in FIG. 24, the fiber movement data of Samples 1-12 are similar in performance among Samples 1-12 and similar in performance to the data shown in FIGS. 19 and 20 for Comparative Samples 1-7 (uncolored coated optical fibers) and Comparative Samples 8-11 (uncoated optical fiber) with respect to IEC standard 61755-3-1, thereby indicating its potential use in connector applications.

### Example 10

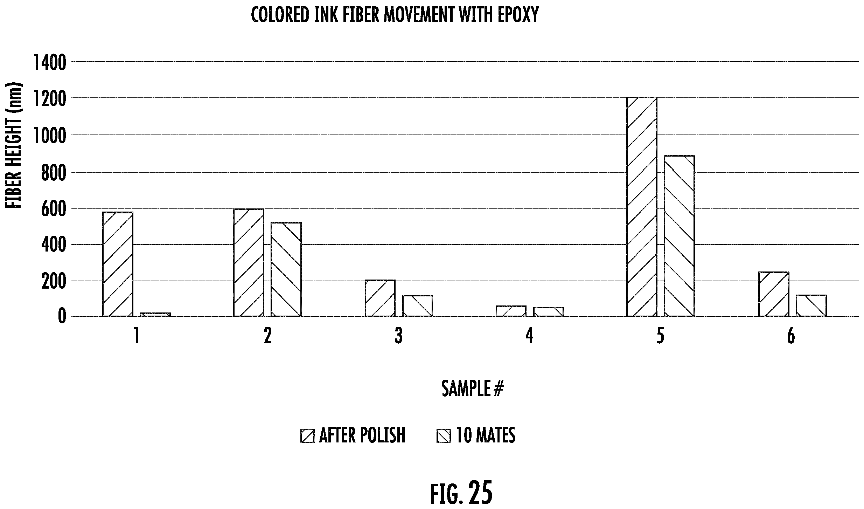

In this Example and with reference to FIG. 25, the optical fiber samples tested had ink coatings that were applied onto the optical fiber samples. In particular, Samples 1-6 shown had blue ink (e.g., 9S2161 as manufactured by Penn Color, Inc.) applied onto the glass cladding of the optical fiber samples. The samples were then inserted into a ferrule of a connector for testing.

As shown in FIG. 25, the fiber movement data of Samples 1-6 indicated that Samples 1-6 did not pass the ferrule insertion test. Moreover, the fiber movement show larger fiber movement after the 10 mates test (e.g., up to 300 nm to 500 nm). Without wishing to be held to any particular theory, the data show that the colored ink Samples 1-6 of this Example do not provide good enough adhesion to the cladding of the optical fiber.

Additionally, an adhesion promoter was provided to additional samples (2 wt.% of (3-Mercaptopropyl)trimethoxysilane (or 2wt% of (3-Acryloxypropyl)trimethoxysilane) was added to White NEO8 Ink, Blue NEO8 Ink, Black NEO8 Ink and Orange NEO8 Ink as manufactured by Penn Color, Inc. However, the thiol silanes in the adhesion promoter decomposed in one day by some components in the NEO8 inks, thereby limiting the use of commercial inks in this application. Without wishing to be held to any particular theory, it is believed that the decomposition of the silanes in the adhesion promoter of the primary coating formulation was due to high water content, high acidity, or high basic impurities.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

It will be apparent to those skilled in the art that various modifications and variations can be made without departing from the spirit or scope of the invention. Since modifications combinations, sub-combinations and variations of the disclosed embodiments incorporating the spirit and substance of the invention may occur to persons skilled in the art, the invention should be construed to include everything within the scope of the appended claims and their equivalents.

## Claims

1. A coated optical fiber comprising:
a glass optical fiber comprising a fiber core and a cladding surrounding the fiber core; and
a polymer coating surrounding the glass optical fiber, the polymer coating comprising a hard coating, a dye concentrate, and an adhesion promoter;
wherein the polymer coating has a thickness between 0.1 microns and 10 microns;
wherein the polymer coating has a concentricity relative to the fiber core ranging between 0.1 microns and 0.5 microns.

2. The coated optical fiber of claim 1, wherein the dye concentrate comprises less than 40 wt.% of a composition of the polymer coating.

3. The coated optical fiber of claim 1 or claim 2, wherein the adhesion promoter comprises less than 4 wt.% of a composition of the polymer coating.

4. The coated optical fiber of any of claims 1-3, wherein the polymer coating is selected from the group consisting of: UV-cured acrylates, organic UV-curing acrylate resins filled with SiO₂ or ZrO₂ nanoparticles, non-acrylate polymers such as polyimides, and silane additives.

5. The coated optical fiber of any of claims 1-4, wherein the concentricity of the polymer coating relative to the fiber core is less than about 0.15 microns.

6. The coated optical fiber of any of claims 1-5, wherein the adhesion promoter is selected from the group consisting of: acryloxy silanes, methacrylate silanes, or Mercapto silanes, such as (3-Mercaptopropyl) trimethoxysilane and (3-acryloxypropyl)trimethoxysilane.

7. An optical fiber connector assembly comprising:
a coated optical fiber comprising:
a glass optical fiber comprising a fiber core and a cladding surrounding the fiber core; and
a polymer coating surrounding the glass optical fiber, the polymer coating having a thickness between 0.1 microns and 10 microns, and a concentricity relative to the fiber core ranging between 0.1 microns and 0.5 microns; and
a ferrule having a front end, a rear end, and a ferrule bore extending between the front end and the rear end, wherein the coated optical fiber is positioned within the ferrule bore;
wherein the polymer coating comprises: a hard coating, a dye concentrate, and an adhesion promoter; and
wherein the dye concentrate comprises less than 40 wt.% of a composition of the polymer coating.

8. The optical fiber connector assembly of claim 7, wherein the adhesion promoter comprises less than 4 wt.% of a composition of the polymer coating.

9. The optical fiber connector assembly of claim 7 or 8, wherein the assembly has an insertion loss ranging between 0.1 dB and 1.5 dB at a reference wavelength of 1310 nm or 1550 nm.

10. The optical fiber connector assembly of any of claims 7-9, wherein the hard coating is selected from the group consisting of: UV-cured acrylates, organic UV-curing acrylate resins filled with SiO₂ or ZrO₂ nanoparticles, non-acrylate polymers such as polyimides, and silane additives.

11. The optical fiber connector assembly of any of claims 7-10, wherein the adhesion promoter is selected from the group consisting of: acryloxy silanes, methacrylate silanes, or Mercapto silanes, such as (3-Mercaptopropyl) trimethoxysilane and (3-acryloxypropyl)trimethoxysilane.

12. A method of preparing an optical fiber connector assembly that includes a coated optical fiber and a ferrule, the coated optical fiber comprising a glass optical fiber and a polymer coating surrounding the glass optical fiber, the glass optical fiber including a fiber core and a cladding surrounding the fiber core, the ferrule having a front end, a rear end, and a ferrule bore extending between the front end and the rear end, the method comprising:
inserting the coated optical fiber into the ferrule;
wherein the polymer coating of the coated optical fiber engages with an inner surface of the ferrule bore;
wherein the coated optical fiber comprises a hard coating, a dye concentrate, and an adhesion promoter;
wherein the polymer coating has a thickness between 0.1 microns and 10 microns; and
wherein the dye concentrate comprises less than 40 wt.% of a composition of the polymer coating.

13. The method of claim 12, further comprising applying a bonding agent on an external surface of the polymer coating prior to inserting the coated optical fiber into the ferrule bore.

14. The method of claim 12 or claim 13, wherein the hard coating is selected from the group consisting of: UV-cured acrylates, organic UV-curing acrylate resins filled with SiO₂ or ZrO₂ nanoparticles, non-acrylate polymers such as polyimides, and silane additives.

15. The method of any of claims 12-14, wherein a concentricity of the polymer coating relative to the fiber core ranges between 0.1 microns and 0.5 microns.
